# EUROPEAN PATENT SPECIFICATION

(11) **EP 0 715 469 B1**
(45) Date of publication and mention of the grant of the patent: **12.09.2001**
(21) Application number: 96101179.8
(22) Date of filing: 11.10.1990
(51) Int. Cl.: H04N 7/32

(54) **Video signal coding/decoding method and apparatus**
Verfahren und Anordnung zum Kodieren/Dekodieren eines Videosignales
Procédé et dispositif de codage/décodage d'un signal vidéo

(30) Priority: 14.10.1989 JP 26704489; 14.10.1989 JP 26704589; 14.10.1989 JP 26704689
(43) Date of publication of application: 05.06.1996
(62) Divisional of application: 90311145.8
(73) Proprietor: SONY CORPORATION, Tokyo (JP)
(72) Inventor: Yonemitsu, Jun, Shinagawa-ku, Tokyo (JP); Yagasaki, Yoichi, Shinagawa-ku, Tokyo (JP); Igarashi, Katsuji, Shinagawa-ku, Tokyo (JP); Veltman, Mark, Shinagawa-ku, Tokyo (JP)
(74) Representative: Ayers, Martyn Lewis Stanley

(56) References cited:
- EP-A- 0 331 236
- US-A- 4 460 923
- US-A- 4 733 298
- US-A- 4 816 914
- US-A- 4 864 393

## Description

The present invention relates to a video signal transmitting system, and is suitably applied to a case where moving picture signals are transmitted.

In the so-called video transmitting system, such as television conference system and television telephone system, video signals representing moving pictures are conventionally sent to a remote destination. The transmission efficiency of significant information is enhanced by efficiently using a transmission capacity of the transmission channel.

For this purpose, the transmitting unit does not send all the sequential frame pictures but performs the so-called frame dropping processing of the frame pictures such as to remove predetermined frames and then transmits the video signals.

In the receiving unit, motion vectors are received from the transmitting unit in place of the video signals of the frames removed, and the original video signals are reconstructed by interpolating the frame pictures, which have undergone the frame dropping processing, by using the motion vectors with reference to information of frame pictures before and after them, the motion vectors being transmitted from the transmitting unit in place of the video signals of the frames dropped (Patent Laid-open Publication No. 60 (1985)-28392).

According to this technique, it is theoretically sufficient to transmit information of motion vectors in place of information of frame pictures which have been dropped, the former being smaller in amount than the latter. Thus, it is considered that the technique efficiently sends significant information of the video signals.

Accordingly, the more frames are dropped, the more efficiently video signals are transmitted.

When video signals are practically undergone high efficiency coding processing and then recorded on a recording medium, such as a compact disc, errors cannot be however prevented from taking place. Moreover, video signals are reversely reproduced and random accessed and hence when a large amount of frames are dropped, it is difficult to reproduce video signals with high quality.

EP-A1-0,289,960 describes an apparatus for reducing the amount of data required to be stored when recording a video image. This document discloses a method of processing image data provided in frames by splitting the image sequence into groups of frames. The first frame of each of these groups is intra-frame processed, with the subsequent frames being inter-frame processed based upon the preceding frame. When the end of the group is reached, the first frame of the successive group is inter-frame processed based upon the last frame of the group. This provides data compression whilst still allowing reverse playback.

DE-A1-3,809,443 describes a similar apparatus to the above which carries out intra-frame coding on an initial frame and then inter-frame coding on subsequent frames based upon the proceeding frame, as long as the amount of change between the two images is not too large. If so the apparatus returns to intra-frame coding for the next frame, at least.

In view of the foregoing, an object of this invention is to provide a video signal transmission system which is capable of transmitting efficiently high quality video signals.

According to the present invention there is provided an encoding method as claimed in claim 1 of the attached claims and a corresponding decoding method as claimed in claim 3. Furthermore, according to the present invention there is provided encoding and decoding apparatus as claimed in claims 5 and 7 respectively.

The nature, principle and utility of the invention will become more apparent from the following detailed description when read in conjunction with the accompanying drawings in which like parts are designated by like reference numerals or characters.

In the accompanying drawings:
FIGS. 1 is a diagrammatic view illustrating a video signal transmitting system according to one embodiment of the present invention;
FIG. 2 is a diagrammatic view showing the operation of the video signal transmitting system;
FIG. 3 is a block diagram showing the overall construction of the transmitting unit;
FIG. 4 is a block diagram showing a reordering circuit;
FIG. 5 is a diagrammatic view showing the operation of the reordering circuit;
FIGS. 6(1) and 6(2) are block diagrams of the motion vector detecting circuit;
FIGS. 7(1) and 7(2) are diagrammatic view showing the operation of the motion vector detecting circuit;
FIG. 8 is a diagrammatic view illustrating frame data;
FIG. 9 is a characteristic graph showing priority detection of the motion vector;
FIG. 10 is a block diagram showing the adaptive prediction circuit;
FIG. 11 is a diagrammatic view showing the operation of the adaptive prediction circuit;
FIG. 12 is a graph of a characteristic curve illustrating the priority selection of the intraframe coding processing and the interframe coding processing;
FIG. 13 is a diagrammatic view showing transmission frame data;
FIGS. 14-16 are diagrammatic views illustrating headers of the frame data;
FIG. 17 is a block diagram showing receiving unit;
FIG. 18 is a diagrammatic view showing the normal mode operation;
FIG. 19 is a diagrammatic view showing the reverse mode operation;
FIG. 20 is a block diagram showing the adaptive prediction circuit;
FIG. 21 is a diagrammatic view showing another embodiment;
FIG. 22 is a block diagram illustrating the adaptive prediction circuit of the another embodiment;
FIG. 23 is a diagrammatic view showing the operation of the adaptive prediction circuit;
FIG. 24 is a diagrammatic view showing the modified form of the adaptive prediction circuit;
FIGS. 25 and 26 are diagrammatic views showing the principle of detection of the motion vector;
FIG. 27 is a block diagram showing the run-length-Huffman encoding circuit;
FIGS. 28 and 29 are diagrammatic views showing the encoding processing of motion vectors ;
FIGS. 30 and 31 are diagrammitic views illustrating the read only memory circuit;
FIGS. 32 and 33 are diagrammatic views showing data of the encoded motion vectors: and

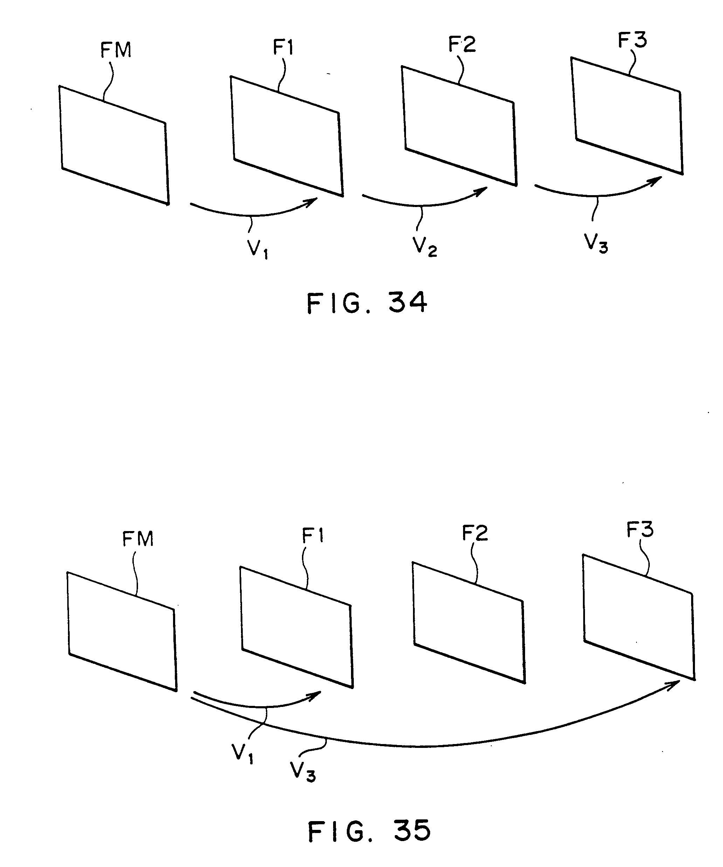

FIGS. 34 and 35 are diagrammatic views illustrating the problem.

Preferred embodiments of this invention will be described with reference to the accompanying drawings.

### (1) Principle of Video Signal Transmission

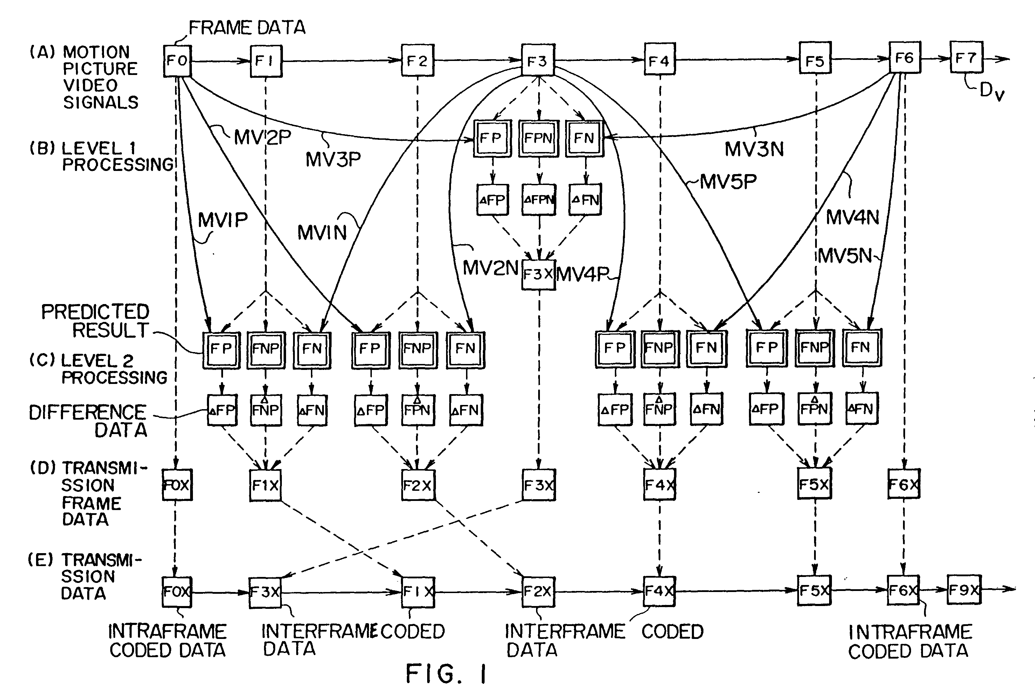

When a video signal coding method according to present invention is applied to a video signal transmitting system, video signals are transmitted according to the technique as shown in FIG. 1.

More specifically, the transmitting unit divides video signals D_{V} of frame data F0, F1, F2, F3 ... into predetermined groups of frames and sequentially processes them (FIG. 1(A)).

In this embodiment, the transmitting unit divides frame data F0, F1, F2, F3 ... into groups of frames each including a unit of six frames, and the leading frame data F0, F6 of each group of frames are intraframe coded and then transmitted.

The intraframe coding processing refers to a processing in which a compression processing is performed on pictures in such a manner that the difference between pixel data is obtained, the pixel data being one- or two-dimensionally adjacent to each other along the scanning direction, for example. With this processing, transmission frame data having each picture compressed in the amount of data are constructed.

Thus, in the receiving unit, frame data for one frame can be reconstructed by sequentially adding transmission frame data, intraframe coded, for one frame.

In the transmitting unit, frame data F1, F2, F3 ... except the leading frame data F0, F6 of each group of frames are interframe coded and then transmitted.

The interframe coding refers to a processing in which after a motion vector is detected between frame data of a predicted frame, which serves as a reference, and frame data to be coded, frame data (hereinafter referred to as predicted result frame data) are produced by shifting the frame data of the predicted frame by amount of the motion vector. The difference in data between the predicted result frame data and frame data to be coded is coded together with the motion vector to produce transmission frame data.

Thus, in the transmitting unit, with respect to each of frame data F1, F2, F3 ... except the leading frame data F0, F6 of each group of frames, a motion vector in connection with a predetermined predicted frame is detected and the interframe coding processing is carried out.

In addition, in the transmitting unit two predicted frames are assigned to each of frame data F1, F2, F3 ..., and a motion vector is detected about each predicted frame.

Furthermore in the transmitting unit, predicted result frame data are produced from frame data of respective predicted frame with reference to two detected motion vectors, and then the resulting two kinds of predicted result frame data are interpolated to generate interpolative predicted result frame data The interframe coding is performed by selecting frame data, of which difference data is the smallest, from the predicted result frame data and interpolative predicted result frame data; that is, selective prediction processing is carried out. Hereinafter, prediction in which frame data, inputted before frame data to be coded, is used as a predicted frame is celled forward prediction; prediction in which frame data, inputted after frame data to be coded, is used as a predicted frame is called backward prediction; and prediction in which interpolative predicted result frame data are used is called interpolative prediction.

Thus, the transmitting unit selectively performs the interframe coding processing so that the transmission frame data become a minimum in the amount of data, and thereby video signals are transmitted with improved transmission efficiency.

When the interframe coding processing is carried out in the transmitting unit, firstly the fourth frame data F3, F9 of each group of frames are interframe coded with previous frame data F0, F6 and the next frame data F6, F12 set as predicted frames (hereinafter referred to as processing level 1). Subsequently, the remaining frame picture F1, F2, F4, F5 ... are interframe coded with previous frame data F0, F3 and the next frame data F3, F6 being set as predicted frames (hereinafter referred to as processing level 2).

The interframe coding processing is small in data amount to be transmitted as compared to the intraframe coding processing. Thus, the more frame data are interframe coded, the smaller the whole video signals to be transmitted become in data amount.

However, when frame data to be interframe coded increase, frame data which are far away from predicted frames, referred to by the frame data, must be interframe coded. Thus, a motion vector must be detected between frame data which are far away from each other, with the result in complicated detection of the motion vector. Particularly, in the selective predicted processing, the transmitting unit becomes complicated since motion vectors to be detected increase.

In the embodiment, frame data F3 are interframe coded with frame data F0 and F6 set as predicted frames. Then, the frame data F3, F0 and F6 are set as predicted frames, and frame data F1, F2, F4, F5 ... between them are interframe coded. With these procedures, motion vectors can be detected between relatively close frame data, so that it is possible to efficiently transmit video signals with a simple construction.

Thus, in the interframe coding processing at the level 1, the transmitting unit sets the leading frame data F0 of a group of frames and the leading frame data F6 of the subsequent group of frames as reference predicted frames for detecting motion vectors to performing forward and backward predictions.

More specifically, the transmitting unit detects the motion vector MV3P between the frame data F0 and the fourth frame data F3 for the forward prediction and the motion vector MV3N between frame data F6 and F3 for the backward prediction (FIG. 1(B)). Then, the frame data F0 and F6 of predicted frames are shifted by amount of the motion vector MV3P and MV3N to construct predicted result frame data FP and FN for forward and backward predictions, respectively.

Subsequently, the transmitting unit linearly interpolates predicted result frame data FP and FN to generate predicted result frame data FPN for interpolative prediction.

After difference data ΔFP, ΔFN, ΔFPN which are the diference in data between frame data F3 and predicted result frame data FP, FN, FPN are obtained, the transmitting unit selects the smallest difference data among the difference data ΔFP, ΔFN and ΔFPN, and converts it to transmission frame data F3X together with motion vectors MV3P and MV3N (FIG. 1(D)).

Thus, in the receiving unit, the original frame data F0 and F6 are reconstructed from the transmission frame data F0X and F6X, and then the original frame data F3 can be reconstructed on the basis of the reconstructed frame data F0 and F6 and the transmission frame data F3X.

On the other hand, in the processing at the level 2, the transmitting unit sets the leading frame data F0 and F6 are the fourth frame data F3 and F9 as predicted frames for the first and the second frame data F1 and F2, F7 and F8, ... and then forward and backward predictions are performed.

Thus, in the transmitting unit, motion vectors MV1P and MV1N; MV2P and MV2N are detected with reference to frame data F0 and F3 (FIG. 1(C)). Then, predicted result frame data FP and FN are constructed with reference to the motion vectors MV1P and MV1N; MV2P and MV2N, respectively, and interpolative predicted result frame data FPN are also constructed.

After difference data △ FP, ΔFN and ΔFPN are obtained with reference to the predicted result frame data FP, FN and FPN, respectively, the smallest difference data among the difference data ΔFP, ΔFN and ΔFPN are selected and converted to transmission frame data F1X and F2X together with the motion vectors MV1P and MV1N; MV2P and MV2N.

Similarly, the fourth frame data F3 and the leading frame data F6 of the subsequent group of frames are set as predicted frames for the fifth and the sixth frame data F4 and F5; F10 and F11; ....

When motion vectors MV4P and MV4N ; MV5P and MV5N are detected, the transmitting unit constructs predicted result frame data FP, FN and FPN with reference to motion vectors MV4P and MV4N; MV5P and MV5N and then frame data FPN to produce difference data ΔFP, ΔFN and ΔFPN. Then, the smallest difference data among the difference data ΔFP, ΔFN and ΔFPN is selected and converted to transmission frame data F4X and F5X together with motion vectors MV4P and MV4N; MV5P and MV5N.

Thus, the frame data are separated into units of 6 frames and are processed in a combination of the intraframe coding processing and the interframe coding processing and then transmitted. Frame data F0, F6, ... which have been intraframe coded and then sent are reconstructed and then the remaining frame data are subsequently reconstructed. If an error occurs, the error is thus prevented from being transmitted to the other group of frames, and hence when the invention is applied to compact discs or the like, high picture quality video signals can be transmitted at high efficiency.

Moreover, when inversely reproduced or random accessed, frame data can be positively reconstructed. Thus, degradation of the picture quality is effectively prevented and video signals can be highly efficiently transmitted.

In this embodiment, transmission frame data F0X-F5X are reordered in each group of frames in the order of the intraframe coding processing and the interframe coding processing and then transmitted (FIG. 1(E)). When transmitted, identification data representing predicted frame data and transmission frame data intraframe coded are added to each of the picture data F0X-F5X.

That is, frame data F1 and F2; F4 and F5 require frame data F0 and F3; F3 and F6 which are predicted frames for encoding and decoding, respectively.

For the frame data F3, the frame data F0 and F6 which are predicted frames are needed for encoding and decoding.

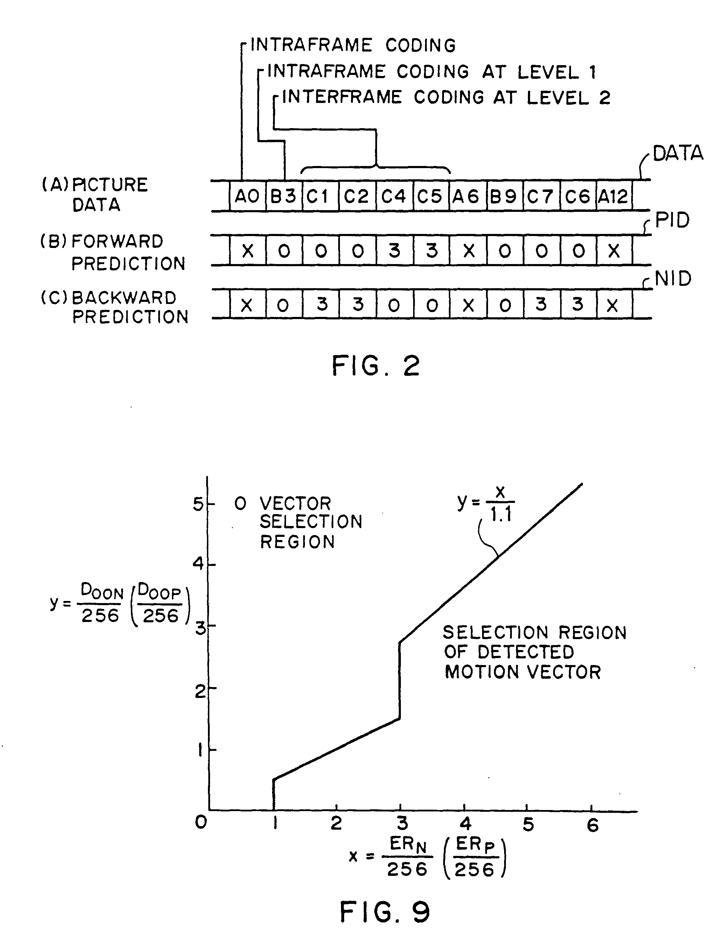

When the frame data to be intraframe coded are represented by a character A and the frame data to be processed at the levels 1 and 2 characters B and C as shown in FIG. 2, the transmitting unit outputs transmission frame data DATA (FIG. 2(A)) in the order of reference frame data A0, B3, C1, C2, C4, C5, A6, B9 ... .

In this operation, the transmitting unit transmits a prediction index PINDEX, forward prediction reference index PID (FIG. 2(B)), backward prediction reference index NID (FIG. 2(C)) together with the transmission frame data; the prediction index PINDEX is for identifying forward prediction, backward prediction or interpolative prediction and the forward prediction reference index PID and the backward prediction reference index NID represent predicted frames of the forward prediction and backward prediction, respectively. With these indexes the receiving unit decodes transmission frame data with ease.

In practice, such transmission of prediction index PINDEX for identifying forward prediction, backward prediction or interpolative prediction, forward prediction reference index PID and backward prediction reference index NID representing predicted frame together with transmission frame data, not only facilitates decoding in the receiving unit but also enables decoding of the original data with ease even if transmission frame data are transmitted in a format different in length of group of frames, processed frames at levels 1 and 2, etc. from the format of this embodiment.

More specifically, original frame data can be decoded by shifting frame data of the predicted frame, which is identified by the forward prediction reference index PID and backward prediction reference index NID according to the prediction index PINDEX, in the amount of the motion vector thereof and then by adding the difference data transmitted.

Thus, the operability of the whole video signal transmission system is enhanced since video signals which are encoded in a different format can be easily decoded.

Moreover, format may be selectively changed in a video signal or in a single recording medium, and hence a high picture quality moving video signals can be easily transmitted.

### (2) Construction of the Embodiment

### (2-1) Structure of the Transmitting Unit

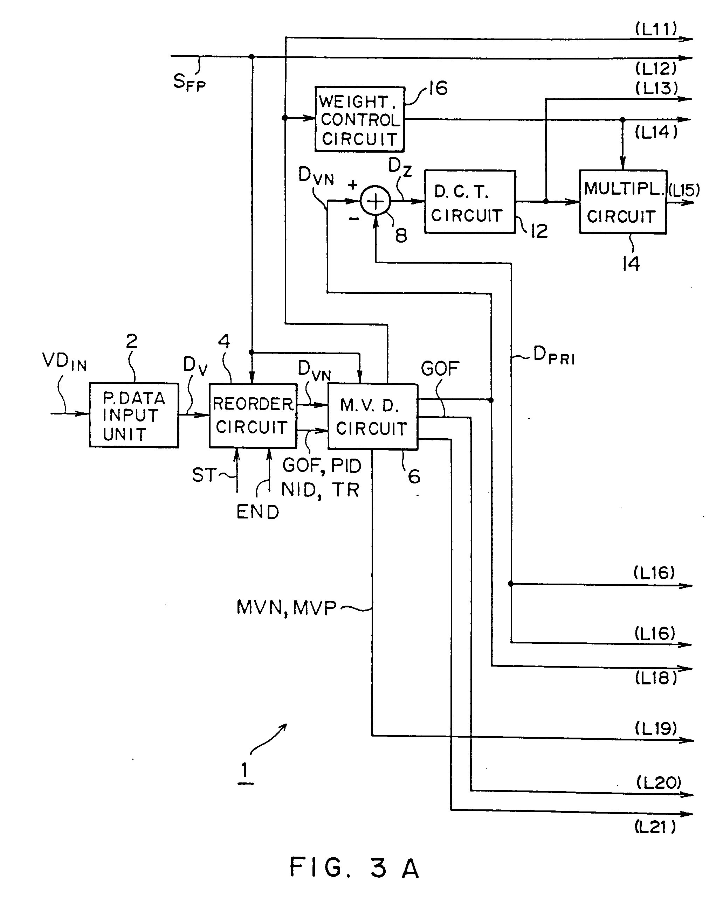

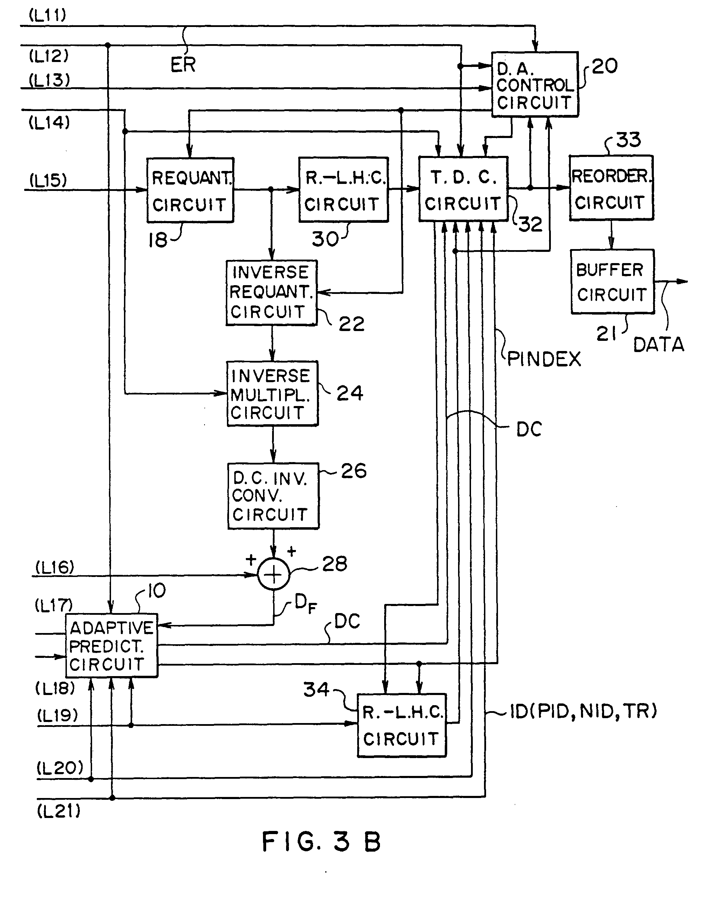

In FIG. 3, numeral 1 indicates a transmitting unit of the video signal transmission system to which is applied the video signal transmission method above described. The transmitting unit highly efficiently encodes and converts input video signals VD_{IN} to transmission frame data DATA and then records them on a compact disc.

The transmission unit 1 provides an input video signal VD_{IN} to a picture data inputting unit 2, where a luminance signal and a chrominance signal which constitute the input video signal VD_{IN} is converted to a digital signal and then the amount of data is reduced to 1/4.

More specifically, the picture data inputting unit 2 provides the luminance signal which has been converted to the digital signal to one field dropping circuit (not shown) to delete one field, and then the remaining one field of the luminance signal is removed every other line.

The picture data inputting unit 2 delete one field from each of the two chrominance signals which have been converted to digital signals and then selectively outputs every other line of the chrominance signals.

The picture data inputting unit 2 converts the luminance signals thinned, and the chrominance signals, selectively outputted, to data of a predetermined transmission rate through a time axis conversion circuit.

With these operations, the input video signal VD_{IN} is preliminarily processed through the picture data inputting unit 2, so that picture data D_{V} which continuously contain sequential frame data described above are constructed.

When a start pulse signal ST is inputted, the reordering circuit 4 separates picture data D_{V}, which are sequentially inputted in the order of frame data A0, C1, C2, B3, C4, C5, A6, C7, ..., into groups of frames in six frames, and then the reordering circuit 4 reorders them in the order to be encoded; A0, A6, B3, C1, C2, C4, C5, A12, B9, C7, ... and outputs them.

The subsequent intraframe coding and interframe coding is simplified by reordering the frame data in the order to encode in such a manner.

When an end pulse signal END rises, the reordering circuit 4 stops outputting of the frame data after the frame data, inputted immediately before the rise of the end pulse signal, is reordered.

The reordering circuit 4 outputs frame group index GOF, forward prediction reference index PID, backward prediction reference index NID and temporary index TR. The frame group index GOF raises its signal level at the head of each group of frames, and the temporary index TR represents the order of the frame data in each group of frames.

A motion vector detecting circuit 6 receives the reordered picture deta D_{VN} and processes each frame data by separating it into predetermined macro unit blocks.

In this processing, the motion vector detecting circuit 6 delays frame data A0, A6, ... which are to be intraframe coded for a predetermined time and outputs them for every macro unit block thereof to a subtracting circuit 8 whereas with respect to frame data B3, C1, C2, C4 ... to be interframe coded, the motion vector detecting circuit 6 detects motion vectors MVP and MVN for each macro unit block with reference to predetermined predicted frames.

Furthermore, in this processing, the motion vector detecting circuit 6 obtains the difference data between frame data to be interframe coded and corresponding predicted result frame data in an absolute value summing circuit to thereby obtain error data ER which is the sum of absolute value of the difference data.

Thus, in this embodiment, quantized stepsize or the like is switched by using the error data ER, so that degradation in picture quality is effectively avoided and video signals are efficiently transmitted.

In addition, the motion vector detecting circuit 6 delays the frame group index GOF, forward prediction reference index PID, backward prediction reference index NID and temporary index TR together with the reordered picture data D_{VN} for a motion vector detection processing time and then outputs them for each macro unit block to the succeeding processing circuit.

The subtracting circuit 8 generates difference data D_{Z} by obtaining the difference in data between predicted data D_{PRI}, outputted from an adaptive prediction circuit 10, and picture data D_{VN} and outputs the difference data D_{Z} to a discrete cosine conversion circuit 12.

In the intraframe coding processing, the adaptive prediction circuit 10 outputs a mean value of picture data of each pixel as predicted data D_{PRI} for each macro unit block.

On the other hand, in the interframe coding processing the adaptive prediction circuit 10 selects one of forward prediction, backward prediction and interpolative prediction by carrying out a selective prediction processing, and then the adaptive prediction circuit 10 outputs selected predicted result frame data as predicted data D_{PRI} for each macro unit block.

This enables difference data D_{Z} (which corresponds to the smallest amount of data among the difference data ΔFP, Δ FNP and ΔFN) to be obtained about frame data to be interframe coded whereas about frame data to be intraframe coded, difference data D_{Z} from the means value can be obtained.

The discrete cosine transformation circuit 12 converts difference data D_{Z} for each macro unit block by means of the DCT (discrete cosine transform) technique.

A multiplication circuit 14 performs a weighting processing of output data from the discrete cosine transformation circuit 12 according to control data outputted from a weighting control circuit 16.

Sight of a human being does not recognize degradation in picture quality of a display picture of which brightness changes in a short period, for example, even if video signals are roughly quantized and transmitted.

On the contrary, degradation of the picture quality is sharply recognized about a region where brightness gradually changes when video signals of that region roughly quantized are sent.

Accordingly, video signals are roughly quantized about the region where brightness changes in a short period and the quantized stepsize is reduced for the brightness gradually 'changing region. In this manner, deterioration of the picture quality is effectively avoided and video signals are efficiently transmitted.

In this case, the quantized stepsize is enlarged for a high portion of the spatial frequency whereas the quantized stepsize is reduced for a low portion of the spatial frequency.

Thus, in this embodiment, a component which is hard to be recognized by human being is equivalently enlarged in quantized stepsize by weighting processing coefficients of which data are outputted from the discrete cosine transformation circuit 12 according to error data ER outputted from the motion vector detecting circuit 6, and thereby the degradation of picture quality is effectively avoided and video signals are efficiently transmitted.

A requantizing circuit 18 requantizes output data of the multiplication circuit 14, in which event the quantized stepsize is switched according to control deta outputted from the data amount control circuit 20.

Sight of the human being recognizes a display picture having a clear outline or boundary of an object to be good in the picture quality, and hence degradation in picture quality is effectively avoided and video signals are efficiently transmitted by reducing the quantized stepsize of the outline and the boundary of the object.

Thus, in this embodiment, the quantized stepsize is switched according to the amount of output data from the discrete cosine transformation circuit 12, the amount of input data from the buffer circuit 21 and error data ER, and thereby the output data of the discrete cosine transformation circuit 12 is requantized to reflect the quality of the picture. In this manner, deterioration of picture quality is effectively avoided and each frame data are transmitted at a fixed amount.

An inverse requantizing circuit 22 receives output data of the requantizing circuit 18 and carries out inverse quantizing processing which is an inverse processing of the requantizing circuit 18 to thereby reconstruct the input data of the requantizing circuit 18.

An inverse multiplication circuit 24 performs a multiplication operation on the output data of the inverse requantizing circuit 22 inversely to the multiplication circuit 14 to thereby reconstruct input data of the multiplication circuit 14.

Inversely to the discrete cosine transformation circuit 12, an inverse discrete cosine transformation circuit 26 converts output data of the inverse multiplication circuit 24, so that the input data of discrete cosine transformation circuit 12 are reconstructed.

A adding circuit 28 adds the predicted data D_{PRI'} outputted from the adaptive prediction circuit 10, to the output data of the inverse discrete cosine transformation circuit 26 and then outputs the resulting data to the adaptive prediction circuit 10.

Thus, in the adaptive prediction circuit 10, frame data D_{F} which reconstructs the input data of the subtracting circuit 8 can be obtained through the adding circuit 28, and thereby the frame data D_{F} are selectively inputted to set a predicted frame. Thus, a selective prediction result is obtained about frame data subsequently inputted to the subtracting circuit 8.

Accordingly, the inputting of frame data reordered in the processing sequence enables a selective prediction result to be detected by sequentially inputting frame data D_{F} in a selective manner in the adaptive prediction circuit 10, and hence video signals can be transmitted with a simple construction.

In a run-length Huffman encoding circuit 30, output data of the requantizing circuit 18 are subjected to Huffman coding processing which is a variable length coding processing and is then outputted to a transmission data composition circuit 32.

Similarly, a run-length Huffman encoding circuit 34 performs huffman encoding on motion vectors MVN and MVP and then output them to the transmission data composition circuit 32.

Synchronously with a frame pulse signal S_{FP}, the transmission data composition circuit 32 outputs output data of run-length Huffman encoding circuits 30 and 34, prediction index PINDEX, forward prediction reference index PID backward prediction reference index NID and temporary index TR together with control information or the like information of the weighting control circuit 16 and the data amount control circuit 20 in a predetermined sequence.

A reordering circuit 33 reorders output data of the transmission data composition circuit 32 in the encoding order for each group of frames and then outputs the data reordered to the buffer circuit 21, through which transmission frame data DATA are outputted.

Thus, transmission frame data DATA which are constructed by high efficiency coding of the input video signal VD_{IN} are obtained, and the recording of the transmission frame data DATA on a compact disc together with a synchronizing signal or the like signal enables deterioration of picture quality to be avoided and provides high density recording of video signals.

### (2-2) Reordering Circuit

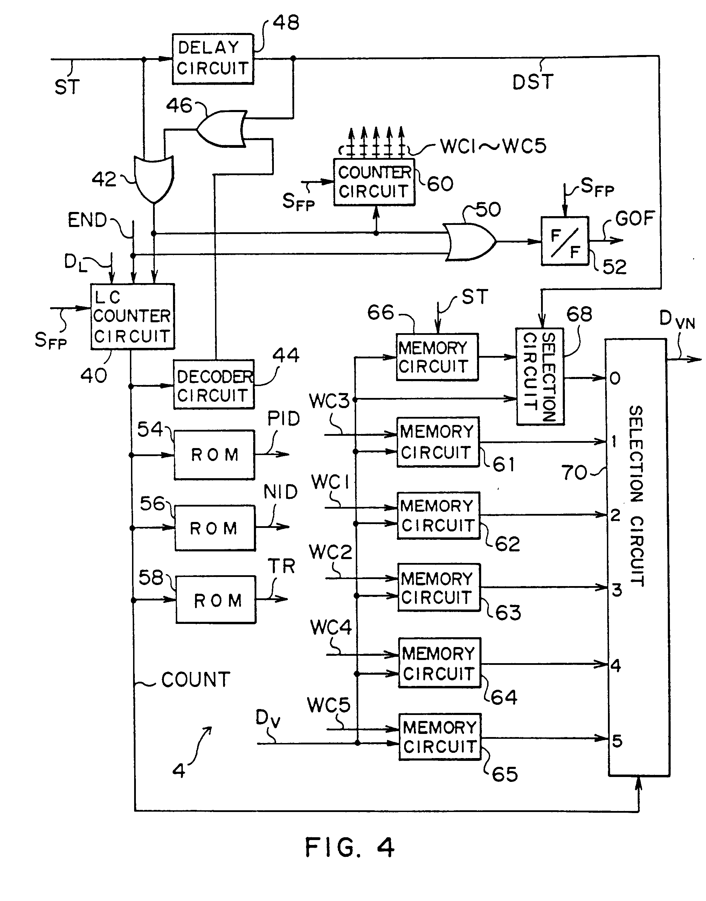

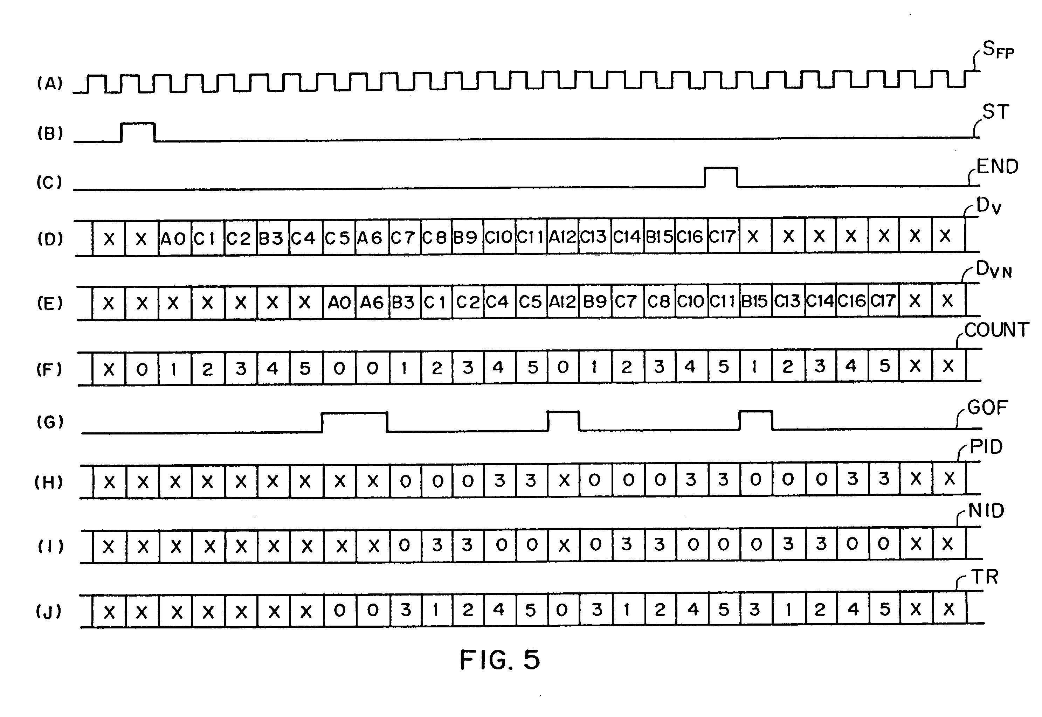

As illustrated in FIGS. 4 and 5, the reordering circuit 4 operates synchronously with the frame pulse signal S_{FP} (FIG. 5(A)) and reorders and outputs picture data D_{V} (FIG. 5(D)) in the order of the intraframe coding processing and the interframe coding processing, the picture data D_{V} being inputted after the start pulse signal ST rises (FIG. 5(B)) and before the end pulse signal END rises (FIG. 5(C)).

More specifically, the reordering circuit 4 provides the start pulse signal ST to a clear terminal C of the counter circuit 40, which increments its count value, through an OR circuit 42 and thereby generates count data COUNT (FIG. 5(F)) which increments its value synchronously with the frame pulse signal S_{FP.}

When the count data COUNT reaches to a value of 5, the decoder circuit 44 activates the clear terminal C through OR circuits 46 and 42.

Thus, the count data COUNT sequentially circularly changes within a range from 0 to 5 synchronously with the frame pulse signal S_{FP}.

A delay circuit 48 delays the start pulse signal ST for five frame cycles and then outputs it to the clear terminal C of the counter circuit 40 through the OR circuits 46 and 42.

Thus, when the start pulse signal ST rises, the clear terminal C of the counter circuit 40 continuously rises for two frame cycles with a delay of five frames cycles, so that count data COUNT having continuous zero values are obtained.

When the end pulse signal END rises, the counter circuit 40 loads data D_{L} of a value 1, and thereby the count data COUNT sequentially changes from a value 1 to a value 5 by jumping over a value 0 after the end pulse signal END rises.

An OR circuit 50 receives the end pulse signal END and an output signal from the OR circuit 42 and provides an output signal to a flip-flop circuit (F/F) 52.

In response to this output signal, the flip-flop circuit (F/F) 52 rises in signal level for the leading two frame cycles of the first group of frames and for the leading one frame cycle of each subsequent group of frames. In this embodiment, the output signal of the flip-flop circuit (F/F) 52 is used as group of frame index GOF (FIG. 5(G)).

According to the count data COUNT, read only memory circuits (ROM) 54, 56 and 58 construct forward prediction reference index PID, backward prediction reference index NID and temporary index TR (FIGS. 5(H), (I) and (J)), respectively.

More specifically, the read only memory circuit 54 outputs a forward prediction reference index PID having a value 0 when the count data COUNT has a value 1, 2 or 3, a forward prediction reference index PID with a value of 3 when the count data COUNT has a value 4 or 5, and stops to output forward prediction reference index PID when the count data COUNT has a value 0.

The read only memory circuit 56 outputs a backward prediction reference index NID having a value 0 when the count data COUNT has a value 1, 4 or 5, a backward prediction reference index NID with a value of 3 when the count data COUNT has a value 2 or 3, and stops to output backward prediction reference index NID when the count data COUNT has a value 0.

The read only memory circuit 58 outputs a temporary index TR having a value 0, 3, 1, 2, 4, 5 when the count data COUNT has a value 0, 1, 2, 3, 4, 5, respectively.

Thus, in response to each of the frame data, there are provided forward prediction reference index PID and backward prediction reference index NID, which are referred to in the intraframe coding processing and the interframe coding processing, and temporary index TR representing the order of the frame data in the group of frames.

A counter circuit 60 controls the timing of writing to memory circuits 61-65 according to an output signal of the OR circuit 42 and thereby frame data are sequentially loaded in the memory circuits 61 to 65.

More specifically, the memory circuit 61 is held in a writing mode during a period of time that the fourth frame data B3, B9, ... of each group of frames are inputted whereas the memory circuit 62 is held in a writing mode while the second frame data C1, C7 ... are inputted.

Similarly, the memory circuits 63, 64 and 65 are held in a writing mode while the third, the fifth and the sixth frame data C2, C8 ..., C4, C10 ..., C5. C11 ... are inputted, respectively.

The memory circuit 66 is placed in a writing mode at the timing of rising of the start pulse signal ST and hence stores the frame data A0 immediately after the rising of the start pulse signal ST.

A selecting circuit 68 is actuated on the basis of a delayed start pulse signal DST outputted from the delay circuit 48. When the delayed start pulse signal DST rises, the selecting circuit 68 outputs the frame data A0 stored in the memory circuit 66 to an input terminal of the following selecting circuit 70 whereas when the delayed start pulse signal DST falls, the selecting circuit 68 directly outputs picture data D_{V}, inputted to the reordering circuit 4, to the selecting circuit 70.

The selecting circuit 70 receives the frame data, outputted from the selecting circuit 68, and the frame data, stored in the memory circuits 61 to 65, and selectively and sequentially outputs them according to count data COUNT, so that the frame data inputted to the reordering circuit 4 are reordered in the order to the intraframe coding processing and the interframe coding processing and are then outputted.

### (2-3) Motion Vector Detecting Circuit

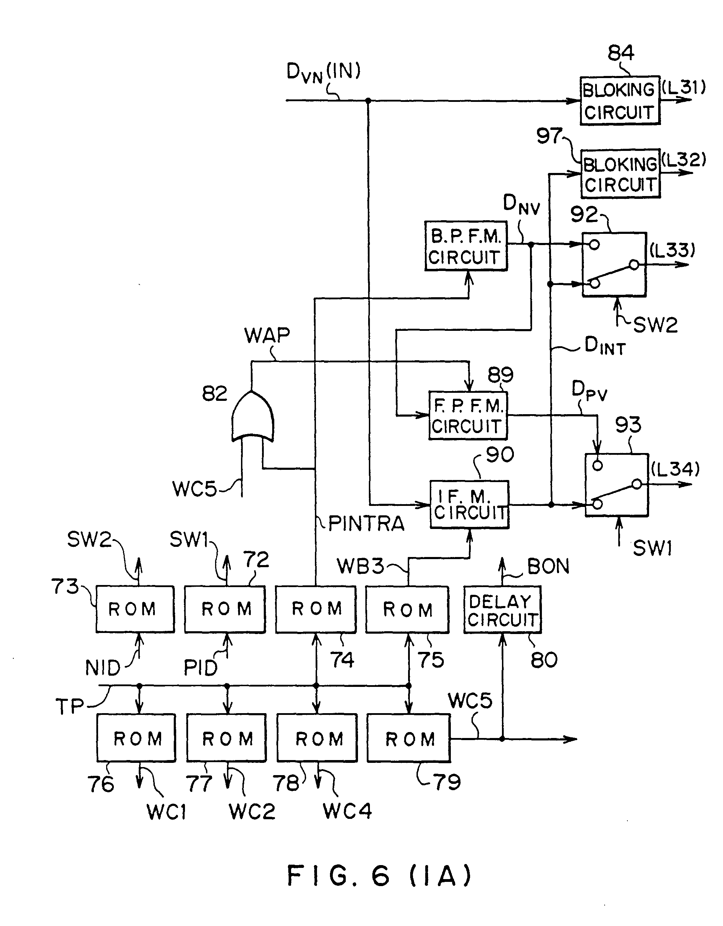

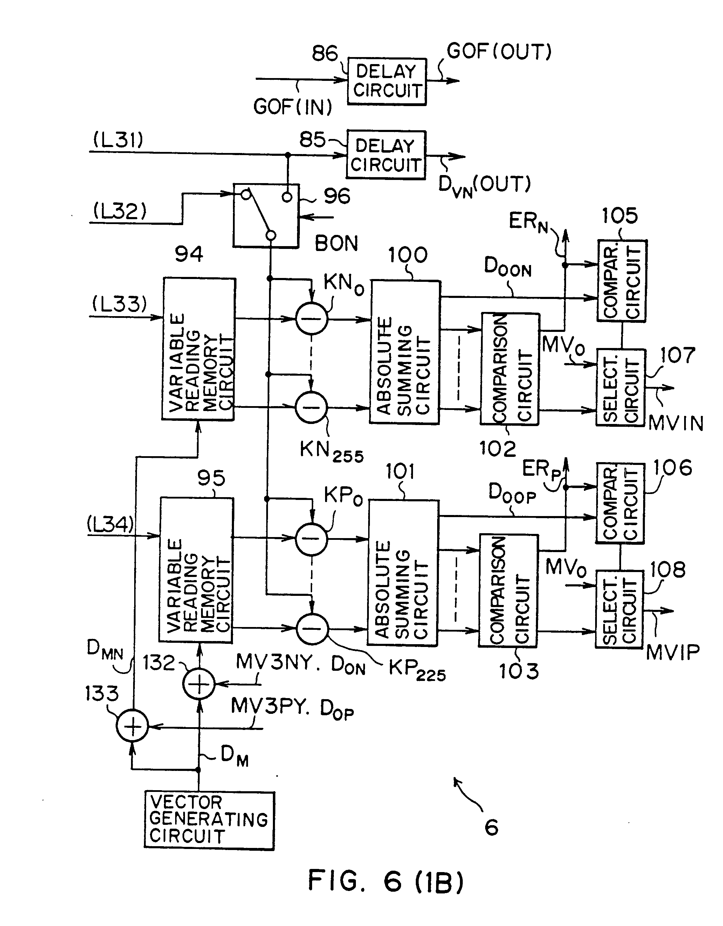

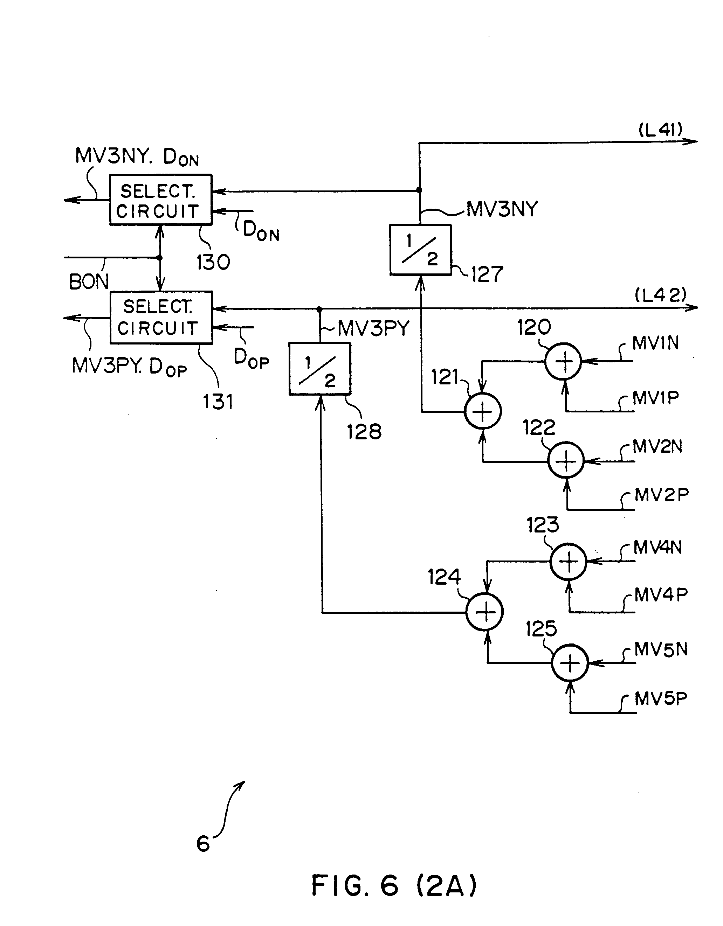

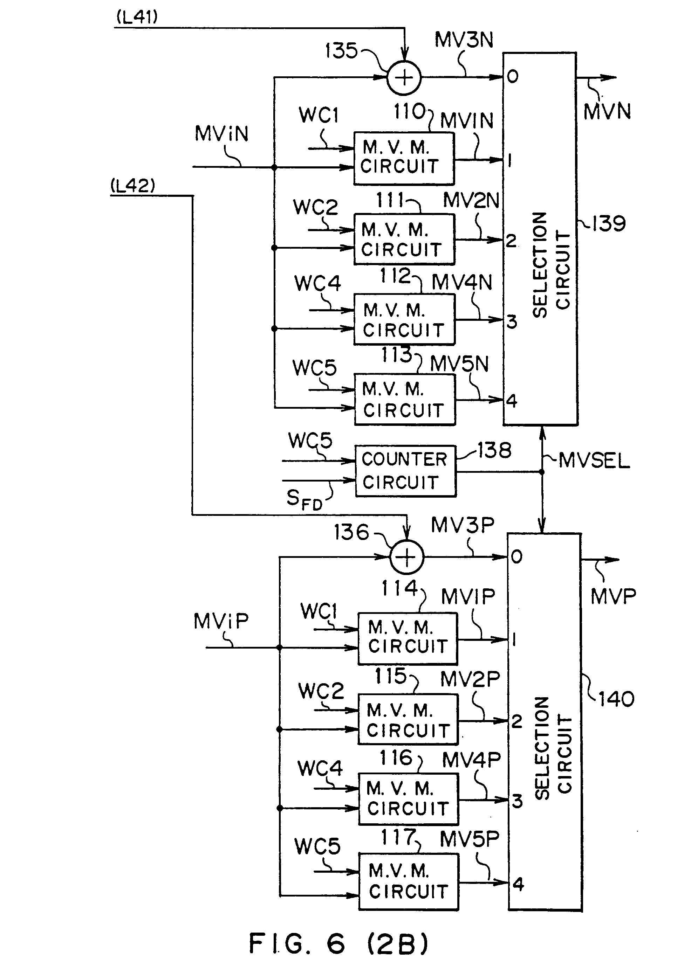

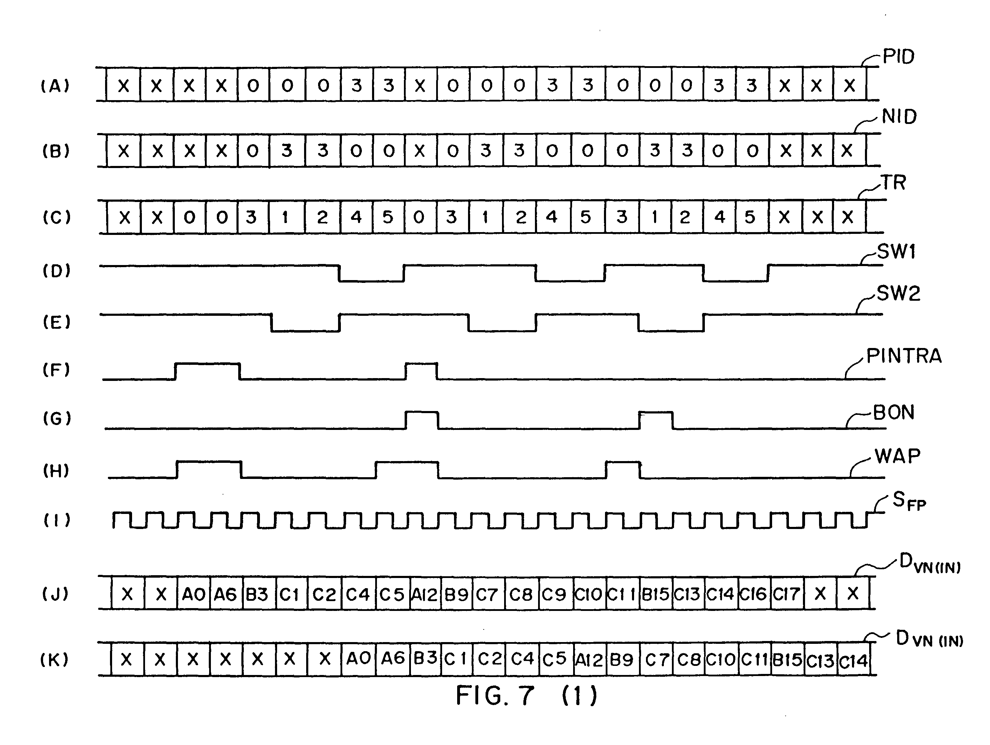

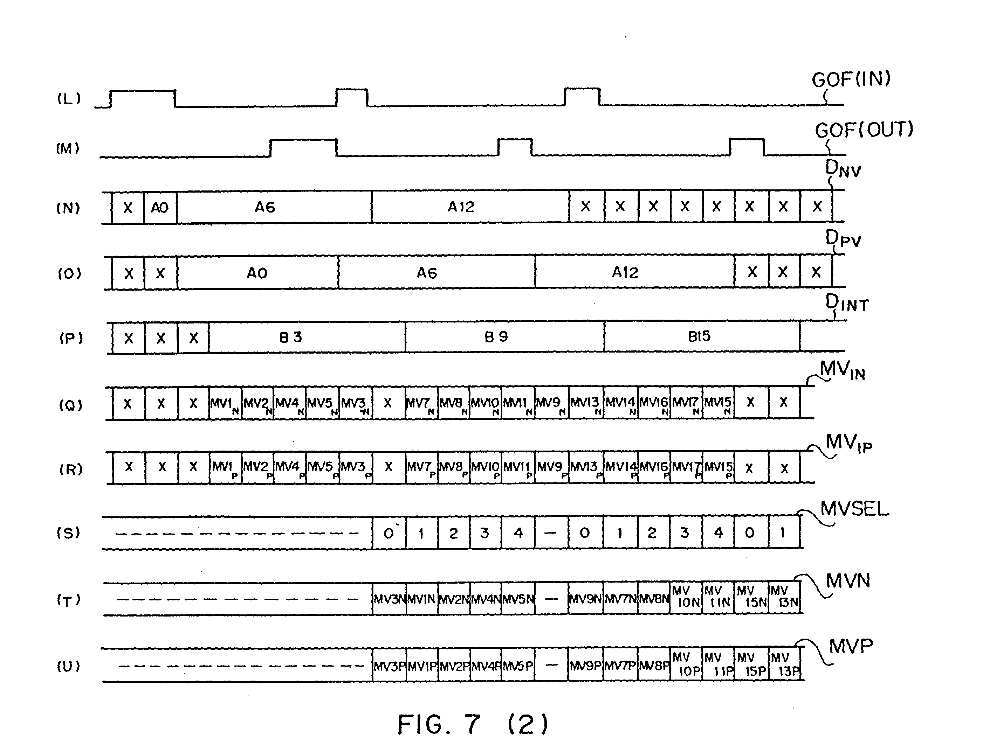

As illustrated in FIGS. 6 and 7, the motion vector detecting circuit 6 processes the picture data D_{VN}, outputted from the reordering circuit 4, with reference to the forward prediction reference index PID, backward prediction reference index NID and temporary index TR (FIGS. 7(A), (B) and (C)).

More specifically, in the motion vector detecting circuit 6, read only memory circuits 72 and 73 receive the forward prediction reference index PID and the backward prediction reference index NID and generate switching control data SW1 and SW2 (FIGS. 7(D) and (E)) of which logic levels fall when the forward prediction reference index PID and the backward prediction reference index NID have a value of 3, respectively.

A read only memory circuit 74 receives the temporary index TR and generates intraframe coding processing control data PINTRA (FIG. 7(F)) of which logic level rises when the temporary index TR has a value of 0 (corresponding to frame data to be intraframe coded).

Similarly, read only memory circuits 75, 76, 77, 78 and 79 generate interframe coding processing control data WB3, WC1, WC2, WC4 and WC5 of which logic levels rise when the temporary index TR has a value of 3, 1, 2, 4 and 5 (corresponding to frame data B3, C1, C2, C4 and C5 to be interframe coded), respectively.

A delay circuit 80 delays the interframe coding processing control data WC5 and generates switching control data BON (FIG. 7(G)) of which logic level rises at a leading frame of each group of frames except the first group of frames.

An OR circuit 82 receives the interframe coding processing control data WC6 and the intraframe coding processing control data PINTRA to generate a frame memory control data WAP (FIG. 7(H)).

Thus, the motion vector detecting circuit 6 operates on the basis of these control data generated in the read only memory circuits 73-79, the delay circuit 80 and the OR circuit 82.

A blocking circuit 84 receives the picture data D_{V(IN)} (FIG. 7(J)), which are sequentially inputted synchronously with the frame pulse signal S_{FP} (FIG. 7(I)) to separate each frame data into predetermined macro unit blocks.

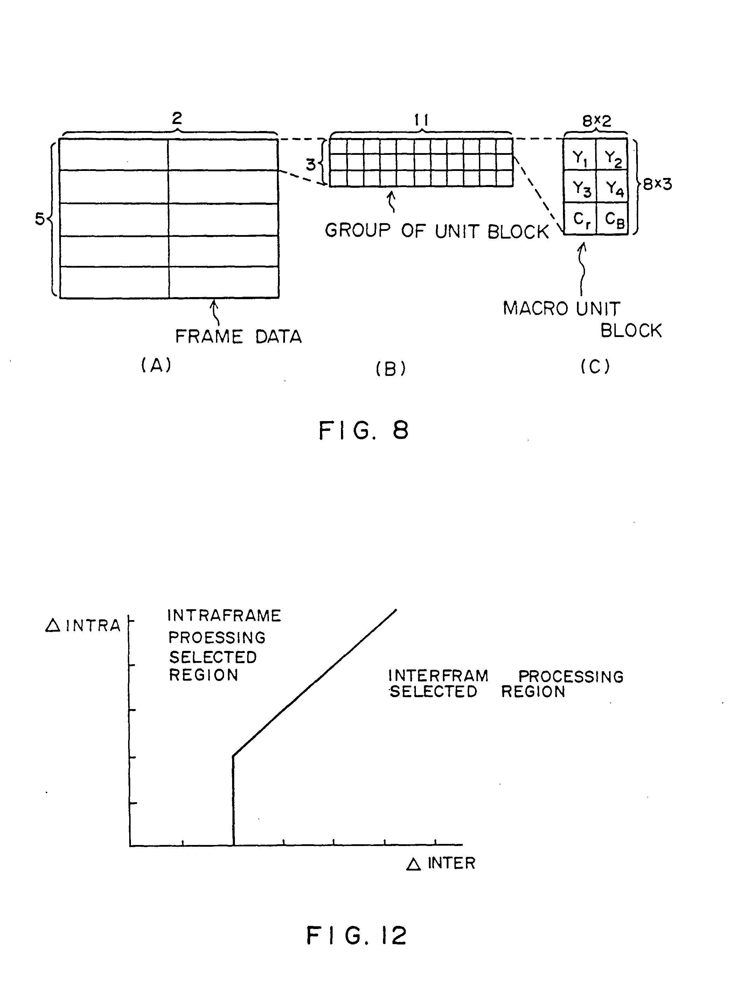

As shown in FIG. 8, each frame data (FIG. 8(A)) is divided in 5 x 2 vertically and horizontally on a display screen to produce 10 groups of block units (FIG. 8(B)).

Furthermore, each group of block units is divided in 3 x 11 vertically and horizontally to produce 33 groups of macro units (FIG. 8(C)). The transmission unit 1 sequentially processes frame data in a group of macro units.

In one group of macro units, picture data of pixels in column of eight and row of eight are assigned to one block, and picture data of six blocks in total are assigned to each macro unit.

Luminance signals Y₁, Y₂, Y₃ and Y₄ of 2 x 2 blocks are allocated to four blocks of the six blocks whereas chrominance signals C_{R} and C_{B} which correspond to the luminance signals Y₁, Y₂, Y₃ and Y₄ are allocated to the remaining two blocks.

Thus, frame data which is divided into 15 x 22 macro unit blocks through the blocking circuit 84 is obtained.

A delay circuit 85 outputs frame data, which are outputted from the blocking circuit 84, with a delay of five frame cycles necessary for the motion vector detection processing.

Thus, in the motion vector detecting circuit 6, picture data D_{V (OUT)} (FIG. 7(K)) are divided in macro unit blocks and outputted synchronously with detection of motion vectors.

A delay circuit 86 delays frame group index GOF (IN) (FIG. 7(L)) by five frame cycles and thereby outputs a frame group index GOF (OUT) (FIG. 7(M)) which coincides in timing with the picture data D_{V} (OUT) outputted from the motion vector detecting circuit 6.

A backward prediction frame memory circuit 88, forward prediction frame memory circuit 89 and interframe memory circuit 90 store respective frame data which are referred to for detecting motion vectors.

More specifically, the backward prediction frame memory circuit 88 is controlled to enter picture data D_{V} into it when intraframe coding processing control data PINTRA rises, and thereby picture data D_{NV} is obtained through the backward prediction frame memory circuit 88. In the picture data D_{NV}, frame data A0 is outputted for one frame cycle, then frame data A6 continues for subsequent 6 frame cycles, and frame data A12 continues for subsequent 6 frame cycles (FIG. 7(N)).

The forward prediction frame memory circuit 89 is controlled to enter frame data into it, the frame data being outputted from the backward prediction frame memory circuit 88 when the frame memory control data WAP rises.

By this operation, picture data D_{PV} is obtained through the forward prediction frame memory circuit 89, the picture data D_{PV} containing frame data A0 continuing for first five frame cycles of six frame cycles, in which frame data A6 is outputted from the backward prediction frame memory circuit 88, frame data A6 continuing for subsequent 6 frame cycles, and frame data A12 for subsequent 6 frame cycles (FIG. 7(0)).

The interframe memory circuit 90 is controlled to receive picture data D_{VN} when the interframe coding processing control data WB3 rises.

By this operation, picture data D_{INT} is obtained through the interframe memory circuit 90, the picture data D_{INT} having the fourth frame data B3, B9 and B15 each continuing for six frame cycles (FIG. 7(P)).

Selection circuits 92 and 93 receive picture data D_{NV} and D_{INT}, D_{PV} and D_{INT} and switch their contacts according to switching control data SW1 and SW2, respectively.

By this operation, the selection circuits 92 and 93 outputs frame data A0, A6, B3 ..., which are referred to for detecting motion vectors, to following variable reading memory circuits 94 and 95 by sequentially switching.

More specifically, in detecting motion vectors MV3N and MV3P of frame data B3, frame data A6 and A0 are outputted to variable reading memory circuits 94 and 95, respectively.

In the processing at the level 2, frame data B3 and A0 are outputted to variable reading memory circuits 94 and 95 when motion vectors MV1N, MV1P and MV2N, MV2P of frame data C1 and C2 are detected, respectively; and frame data A6 and B3 are outputted to variable reading memory circuits 94 and 95 when motion vectors MV4N, MV4P and MV5N, MV5P of frame data C4 and C5 are detected, respectively.

When the motion vector of frame data C1 is detected within a range of pixels in 8 columns and 8 rows, for example, with reference to reference frame A0, to detect the motion vector of the frame data C2 it is necessary to detect it within a range of pixels in 16 columns and 16 rows with reference to the frame data A0.

Similarly, to detect motion vectors of the frame data C4 and C5 with reference to frame data A6, it is necessary to detect them within a range of pixels in 16 columns and 16 rows and pixels in 8 columns and 8 rows, respectively.

Thus, for the processing at the level 2 it is necessary to detect a moving vector within a maximum range of pixels in 16 columns and 16 rows.

On the other hand, to detect the motion vector of the frame data B3 with reference to frame data A0 and A6, it is necessary to detect it within a range of pixels in 24 columns and 24 rows.

Thus, when frame data is divided in groups of predetermined frames, and when frame data in each group of frames is interframe coded and then transmitted, the motion vector detecting range becomes too large in the motion vector detecting circuit 6, and hence it is likely that the motion vector detecting circuit 6 becomes complicated.

To avoid this, in this embodiment the motion vectors at the level 2 are firstly detected, and then the motion vector detecting range of the frame data B3 is set with reference to the result of the detection. Thus, the overall structure of the motion vector detecting circuit 6 is simplified.

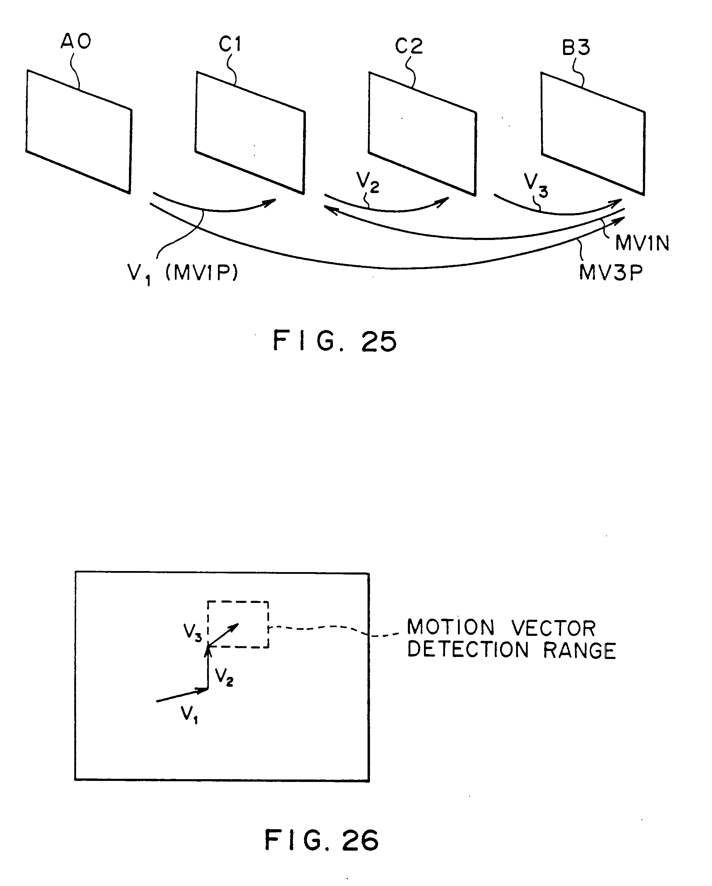

More specifically, as shown in FIGS. 25 and 26, with respect to each frame data C1, C2 from the frame data A0 to the frame data B3, motion vectors V₁, V₂, V₃ are sequentially detected, and the sum V₁ + V₂ + V₃ of the motion vectors V₁, V₂ and V₃ is detected.

Then, a motion vector detection range of the frame data B3 is set with a position, shifted by the sum vector V₁ + V₂ + V₃, placed centrally, and a motion vector MV3P is detected within the motion vector detection range.

In this manner, the motion vector MV3P can be detected within a small motion vector detection range.

In this embodiment, the forward prediction and backward prediction motion vectors are detected to detect the motion vectors at the level 2, and motion vectors MV1P and MV1N of the frame data C1 are detected. Thus, the motion vector MV3P can be detected within a smell motion detection range by setting the motion vector detection range with the position, offset by the motion vectors MV1P and MV1N, placed centrally.

A selection circuit 96 provides frame data C1, C2, C4 and C5 which are to be processed at the level 2 to subtraction circuits KN₀-KN₂₅₅ and KP₀-KP₂₅₅.

On the other hand, in the processing at the level 1, the selection circuit 95 switches the contact to provide frame data B3, which is once stored in the interframe memory circuit 90, to the subtraction circuits KN₀-KN₂₅₅ and KP₀-KP₂₅₅ through a blocking circuit 97.

The blocking circuit 97 divides the frame data B3 into macro unit blocks and outputs them as in the blocking circuit 84, and thereby the blocking circuit 97 provides frame data B3 for every macro unit block to the subtraction circuits KN₀-KN₂₅₅ and KP₀-KP₂₅₅.

Thus, motion vectors are sequentially detected about frame data C1, C2, C4 and C5, and then a motion vector is detected about the frame data B3.

The selection circuits 92 and 93 switch their contacts according to the motion vector detection sequence and sequentially output frame data B3 and A0, B3 and A0, A6 and B3, A6 and B3 to variable reading memory circuits 94 and 95 at the timing of inputting of frame data C1, C2, C4 and C5 to the motion vector detecting circuit 6. Then, frame data A6 and A0 are outputted during the subsequent one frame cycle.

The subtraction circuits KN₀-KN₂₅₅ and KP₀-KP₂₅₅ each include 256 x 2 subtraction circuits connected in parallel and sequentially input picture data of the luminance signal which constitutes each macro unit block.

The variable reading memory circuits 94 and 95 output frame data, which are inputted through the selection circuits 92 and 93, in a parallel manner to the subtraction circuits KN₀-KN₂₅₅ and KP₀-KP₂₅₅ according to control data D_{M} outputted from the vector generating circuit 98.

When in the processing at the level 2, the first picture data of the first macro unit block is inputted to the subtraction circuits KN₀-KN₂₅₅ and KP₀-KP₂₅₅, the variable reading memory circuits 94 and 95 output picture data to the subtraction circuits KN₀-KN₂₅₅ and KP₀-KP₂₅₅, the picture data being within a range of pixels in 16 columns and 16 rows about the picture data (that is, picture data within the motion vector detecting range).

Similarly, when the second picture data of the first macro unit block is inputted to the subtraction circuits KN₀-KN₂₅₅ and KP₀-KP₂₅₅, variable reading memory circuits 94 and 95 outputs picture data, within a range of pixels in 16 columns and 16 rows about the second picture data from the frame data of the predictive frame, to the subtraction circuits KN₀-KN₂₅₅ and KP₀-KP₂₅₅.

In the processing at the level 2, the variable reading memory circuits 94 and 95 sequentially output picture data within the motion vector detecting range with respect to picture data inputted to the subtraction circuits KN₀-KN₂₅₅ and KP₀-KF₂₅₅.

Thus, in the level 2 processing, difference data, which is given in displacement of the prediction vector in the motion vector detecting range, can be obtained for each picture data of frame data to detect the motion vector through the subtraction circuits KN₀-KN₂₅₅ and KP₀-KP₂₅₅.

On the other hand, in the processing at the level 1, the variable reading memory circuits 94 and 95 output picture data to the subtraction circuits KN₀-KN₂₅₅ and KP₀-KP₂₅₅, the picture data being within a range of pixels in 16 columns and 16 rows about picture data displaced a predetermined amount from the picture data, which has been inputted to the subtraction circuits KN₀-KN₂₅₅ and KP₀-KP₂₅₅ with reference to the results of the detection of frame data C1 and C2, C4 and C5.

Thus, in the processing at the level 1, difference data, which are given in displacement of the predicted frame, can be obtained within the motion vector detecting range for each picture data of frame data B3 through the subtraction circuits KN₀-KN₂₅₅ and KP₀-KP₂₅₅, the motion vector detecting range being shifted a predetermined amount.

Absolute value adding circuits 100 and 101 receive subtraction data of each subtraction circuits KN₀-KN₂₅₅ and KP₀-KP₂₅₅ and detect a sum of the absolute values of the subtraction data for each of the subtraction circuits KN₀-KN₂₅₅ and KP₀-KP₂₅₅, and then absolute value adding circuits 100 and 101 outputs the sum of the absolute values for each macro unit block.

Thus, in the level 2 processing, 256 (16 x 16) difference data is obtained for each macro unit block, the difference data being produced through absolute value adding circuits 100 and 101 when the predicted frames are subsequently displaced within the motion vector detecting range about the macro unit block shifted a predetermined amount.

On the other hand, in the processing at level 1, 256 difference data is obtained for each macro unit block, the difference data being produced with reference to the macro unit block when the predicted frame is subsequently displaced within the motion vector detecting range shifted a predetermined amount.

The comparison circuits 102 and 103 receive 256 difference data outputted from the absolute value adding circuits 100 and 101 and output difference data D_{OON} and D_{OOP} of the difference data to comparison circuits 105 and 106, the difference data D_{OON} and D_{OOP} being produced when picture data of the predicted frame is vertically and horizontally displaced 0 pixel (that is, when the predicted frame is not moved).

Moreover, the comparison circuits 102 and 103 detect and output minimum values among the remaining difference data as error data ER(ER_{N} and ER_{P}) as well as detect position information of the minimum difference data.

Thus, the position information to displace the predicted frame so as to minimize the difference data can be detected through the comparison circuits 102 and 103, and thereby motion vector can be sequentially detected about each macro unit block.

The error data ER (ER_{N} and ER_{P}) can be judged that the larger its value is, the more largely the picture changes in each macro unit block.

Thus, it is possible to judge according to the error data ER whether or not the region moved.

The error data ER becomes larger in value at outlines and boundary portions.

Thus, the nature of the picture can be reflected to the requantizing processing by switching the quantizing stepsize at the data amount control circuit 20 as a reference of error data ER, and thereby video signals can be transmitted with effectively avoided deterioration of picture quality.

It is considered that the higher the spatial frequency is, the larger the error data ER becomes.

Accordingly, video signals can be highly efficiently transmitted with effectively avoided deterioration of picture quality by weighting the result of transformation according to the error data ER in the multiplication circuit 14, the transformation result being outputted from the discrete cosine conversion circuit 12.

Thus, the nature of the picture can be reflected to the requantizing processing by switching the quantizing stepsize of the requantizing circuit 18 on the basis of the error data ER and by controlling weighting processing of the multiplying circuit 14, and thereby video signals can be transmitted with effectively avoided deterioration of picture quality.

It is possible to detect positional information to move predicted frames so as to minimize difference data with reference to a minimum difference data, and hence motion vectors can be sequentially detected with respect to each macro unit block.

The comparison circuits 105 and 106 provides outcomes of the comparison between the error data ER_{N}, ER_{P} and the difference data D_{OON}, D_{OOP}, respectively.

During these operations, the comparison circuits 105 and 106 convert the error data ER_{N}, ER_{P} and the difference data D_{OON}, D_{OOP} to an amount of error and difference per one pixel as represented by the following equations:$\text{x =} \frac{{\text{D}}_{\text{OON}} {\text{(D}}_{\text{OOP}} \text{)}}{\text{256}}$$\text{y =} \frac{{\text{ER}}_{\text{N}} {\text{(ER}}_{\text{P}} \text{)}}{\text{256}}$ and in a range where the amount of error and difference are small, 0 vector is preferentially selected as the motion vector.

When in a range having a small amount of error and difference, difference data .EN and .EP (FIG. 1) are generated with reference to the motion vectors, detected in the comparison circuits 102 and 103, the amount of data of the difference data .EN and .EP does not become considerably small as compared to the case where difference data .EN and .EP are generated on the basis of 0 vector, and the total amount of data increases because of transmission of the motion vector as significant information.

Thus, in this embodiment, video signals are as a whole efficiently transmitted by preferentially selecting 0 vector as motion vector in the comparison circuits 105 and 106.

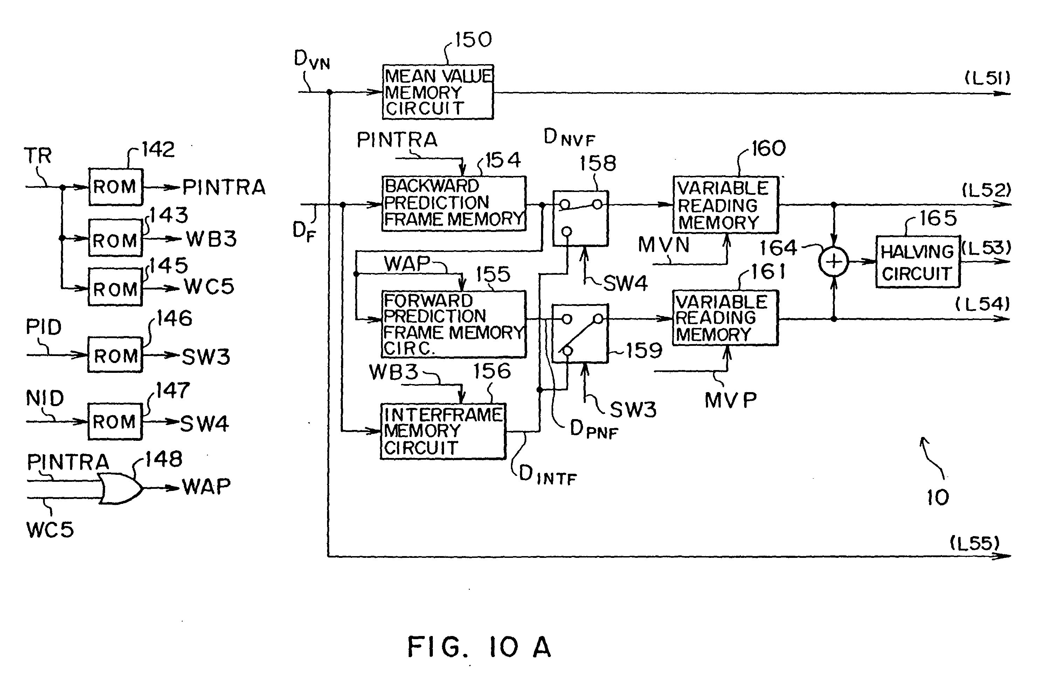

The comparison circuits 106 and 106 switch contacts of the selection circuits 107 and 108 by outputting switching signals to selectively output 0 vector data MV₀, and the detected motion vectors outputted from the comparison circuits 102 and 103 according to the precedence of FIG. 9, and thereby motion vectors MViN and MViP (FIGS. 7(Q) and (R)) can be obtained through the selection circuits 107 and 108.

Motion vector memory circuits 110-113 and 114-117 enter motion vectors MViN and MViP in response to interframe coding processing control data WC1, WC2, WC4, WC5 and thereby input motion vectors MV1N, MV2N, MV4N, MV5N and MV1P, MV2P, MV4P, MV6P for forward prediction or backward prediction with respect to frame data C1, C2, C4, C5 which are processed at the level 2.

On the other hand, adding circuits 120-122 and 123-125 receive motion vectors MV1N, MV2N, MV4N, MV5N and MV1P, MV2P, MV4P, MV5P, which have stored in the motion vector memory circuits 110-113 and 114-117 and output the result of adding of the motion vectors MV1N, MV1P, MV2N, and MV2P and the result of adding of the motion vectors MV4N, MV4P, MV5N and MV5P to halving circuits 127 and 128, respectively.

In this embodiment, firstly motion vectors at the level 2 are detected, and then with reference to the result of the detection motion vectors are detected within a maximum range in 16 columns and 16 rows by previously setting the motion vector detecting range of the frame data B3. Thus, the overall structure of the motion vector detecting circuit 6 is simplified.

To do so, the adding circuits 120-125 and halving circuits 127 and 128 obtain 1/2 of the results of the adding about motion vectors MV1N-MV5P, and thereby predicted motion vectors MV3NY and MN3PY which are represented by the following equations are produced:$\begin{matrix}\begin{matrix}\begin{matrix}\text{MV3NY =} \frac{\text{1}}{\text{2}} \text{· {(MV1N - MV1P) + (MV2N - MV2P)}}\end{matrix} \\ \begin{matrix}\text{MV3NP =} \frac{\text{1}}{\text{2}} \text{·{(-MV4N + MV4P) + (-MV5N + MV5P)}}\end{matrix}\end{matrix}\end{matrix}$ then, the predicted motion vectors MV3NY and MV3PY are outputted to adding circuits 132 and 133 through selection circuits 130 and 131.

The selection circuits 130 and 131 switch their contacts in response to switching control data BON and thereby selectively output data a D_{ON} and D_{OP} having a value of 0 about frame data C1, C2, C4 and C5 to be processed in the level 2 and predictive motion vectors MV3NY and MV3PY about frame data B3 to be processed in the level 1.

On the other hand, adding circuits 132 and 133 add output data MV3NY, D_{ON} and MV3PY, D_{OP} of the selection circuits 130 and 131 to control data D_{M} outputted from the vector generating circuit 98.

Therefore, the motion vector is detected in the motion vector detecting region about each macro unit block with reference to the frame data C1, C2, C4, C5, and the motion vector detecting region displaced by the predicted motion vector MV3NY and MV3PY with reference to the frame data B3.

Accordingly, motion vectors between frame data A0 and B3, B3 and A6, which are frames away from each other, can be positively detected within a small motion vector detection range, and motion vectors can be detected with a simple construction.

The motion vector detection range of the forward prediction motion vector MV3P is set by averaging the sum of the forward prediction and backward prediction motion vectors of the frame data C1, C2, and the motion vector detection range of the forward prediction motion vector MV3N is set by averaging the sum of the forward prediction and backward prediction motion vectors of the frame data C4, C5. Thus, motion vectors can be positively detected.

Adding circuits 135 and 136 add predicted motion vectors MV3NY and MN3PY to motion vectors outputted from selection circuits 107 and 108 at the level 1 processing, so that motion vectors MV3P and MV3N are obtained. Thus, motion vectors MV3N and MV3P between frame data far away from each other with a simple construction as a whole.

A counter circuit 138 is composed of quinary counter circuit which sequentially counts frame pulse signals S_{FP} after it is cleared by interframe coding processing control data WC5, and the counter circuit 138 outputs motion vector selection data MVSEL (FIG. 7(S)) which sequentially circulates from value 0 to value 4.

Selection circuits 139 and 140 sequentially switch their contacts in response to the motion vector selection data MVSEL and thereby selectively output motion vectors MV3N and MV3P, outputted from the adding circuits 135 and 136, and motion vectors MV1N to MV5P stored in motion vector memory circuits 110 to 117. Thus, motion vectors MVN and MVP (FIGS. 7(T) and (U)) can be sequentially obtained through the motion vector detecting circuit 6.

### (2-4) Run-length-Huffman Encoding Circuit

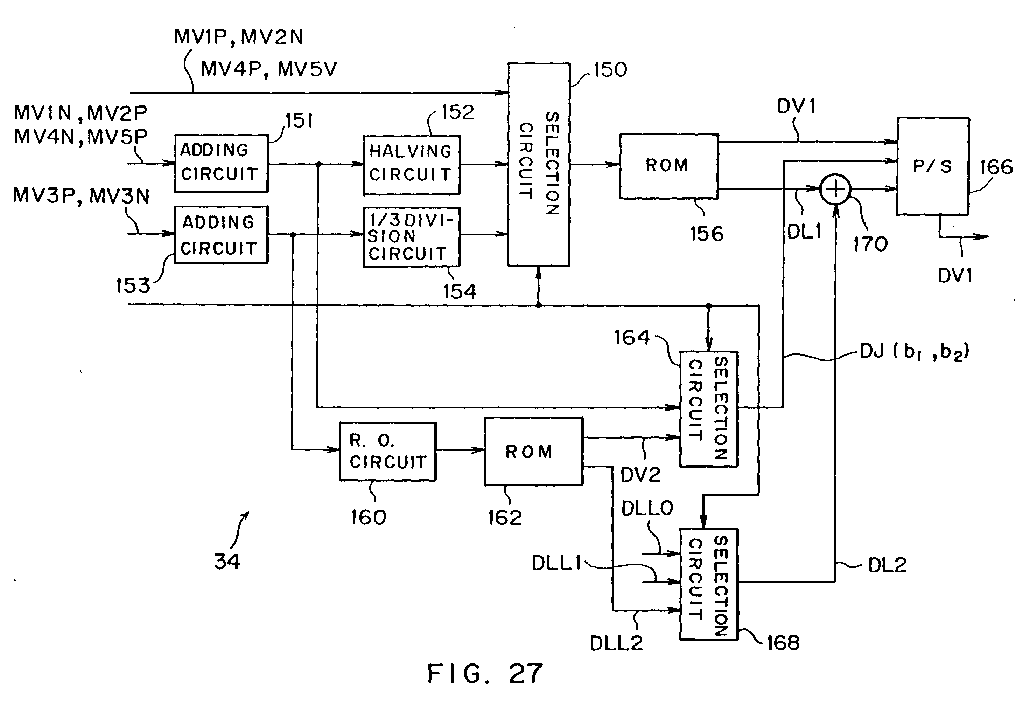

As shown in FIG. 27, the run-length-Huffman encoding circuit 34 provides forward prediction motion vectors MV1P, MV4P of frame data C1, C4 and backward prediction motion vectors MV2N, MV5N of frame data C2, C5 (that is, motion vectors which are detected by using frame data A0, B3, A6 as reference frames and hereinafter referred to as single vector) to a selection circuit 150.

An adding circuit 151 receives backward prediction motion vectors MV1N, MV4N of frame data C1, C4 and forward prediction motion vectors MV2P, MV5P of the frame data C2, C5 (that is, motion vectors of frame data which are two frames away from frame data A0, B3, A6 and hereinafter referred to as double vectors), and the adding circuit 151 adds a value of 1 to the motion vectors to output when values of the latter are positive whereas it subtracts a value of -1 from the motion vectors to output when values of the latter are negative.

A halving circuit 152 receives an output of the adding circuit 151, and the result of the halving from which a remainder is removed is outputted to the selection circuit 150.

That is, the adding circuit 151 and the halving circuit 152 convert the motion vectors MV1N, MV4N, MV2P and MV5P to motion vectors per one frame and output them.

On the other hand, an adding circuit 153 receives motion vectors MV3P and MV3N of frame data B3 (that is, motion vectors of frame data which are three frames away from frame data A0, A6 and hereinafter referred to as triple vectors), and the adding circuit 153 adds a value of 2 to the motion vectors to output when the values of the latter are positive whereas it subtracts a value of -2 from them to output when the values are negative.

A 1/3 division circuit 154 receives an output from the adding circuit 153 and outputs the result of the 1/3 division, from which a remainder is removed, to the selection circuit 150.

That is, the adding circuit 153 and the 1/3 division circuit 154 converts motion vectors MV3P and MV3N to motion vectors per one frame and outputs them.

In this manner, the motion vectors which are inputted to the selection circuit 150 are set to values which are equal to probabilities of their appearance, and thereby each motion vector is optimized with ease.

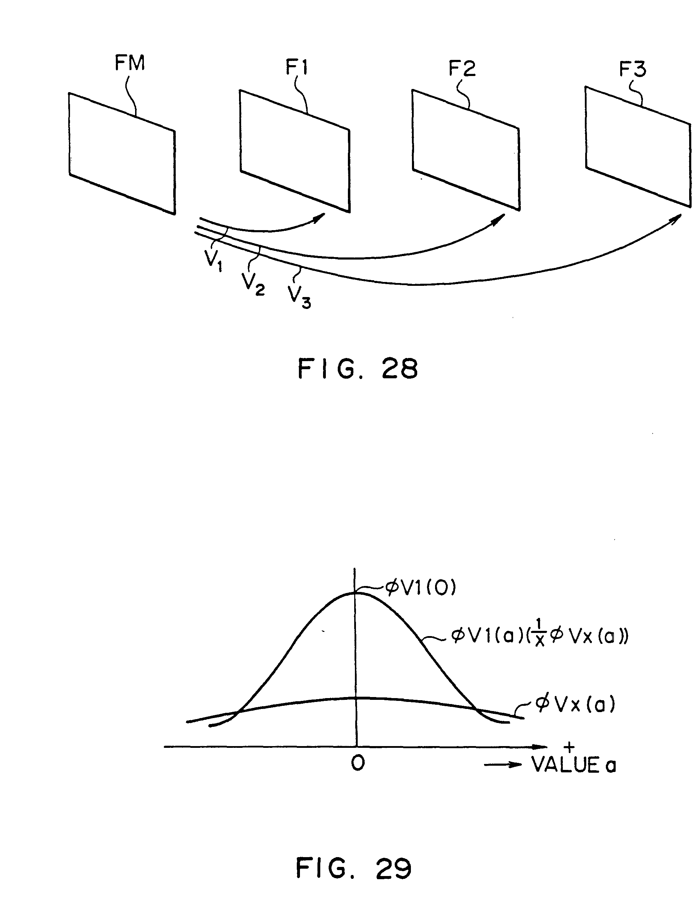

More specifically, as shown in FIG. 28, in sequentially continuous frames FM, F₁, F₂ and F₃, motion vectors V₁, V₂ and V₃ which referred to the frame FM have relationship of the following equations when the frames FM, F₁, F₂ and F₃ are strongly correlated:${\text{V}}_{\text{2}} \text{≒ 2V1}$${\text{V}}_{\text{3}} \text{≒ 3V1}$

Accordingly, a motion vector V_{X} of frames which are x frames away from each other is generally represented by the following equation:${\text{V}}_{\text{X}} {\text{≒ x V}}_{\text{1}}$

This will be understood from that the probability V_{X}(a) of the motion vector V_{X} is expressed by multiplying an appearance probability φV1(a) of the motion vector V₁ by x in the horizontal axis when the appearance probability is statistically expressed with the motion vector represented by a.

Thus, when the motion vector V_{X} is divided by x with the remainder removed and is then expressed using the value a, it is understood that: the appearance probability 1/X φ V_{X} (a) of the motion vector V_{X} is equal to the appearance probability φV₁(a) of the motion vector V_{X} and the motion vector V₁ can be optimized by using the same table.

According to this principle, the run-length-Huffman encoding circuit 34 provides a selected output of the selection circuit 150 to a read only memory 156 and outputs a data DV1 stored in the read only memory 156 by using the selected output as an address.

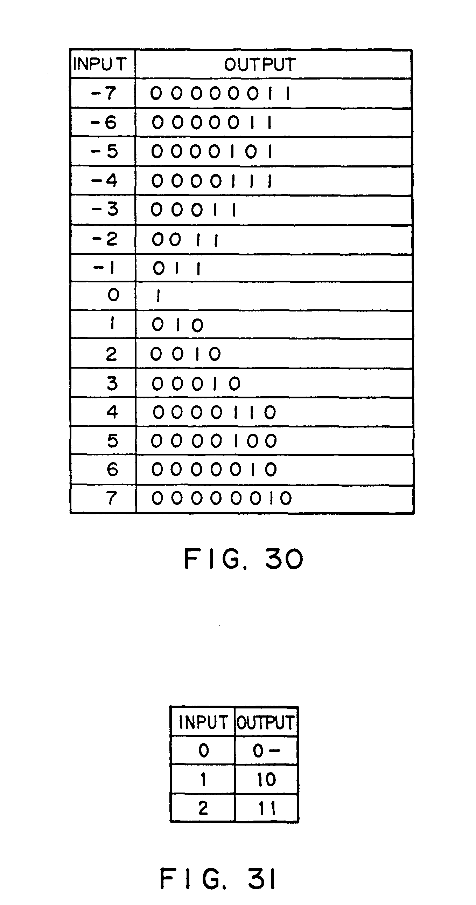

As illustrated in FIG. 30, the read only memory 156 is designed to output in response to input data variable length coded such that the length of codes becomes sequentially longer with an input data having a value of 0 placed centrally, and thereby motion vectors converted per one frame are coded in the optimized manner.

That is, when value of motion vectors are statistically detected, a motion vector having a value of 0 has the highest appearance probability and the appearance probability becomes smaller as the values of motion vectors becomes larger.

Thus, in this embodiment, coding has been carried out so that the motion vectors having a value of 0 have the shortest code table, and thereby amount of data which is necessary to send motion vectors is, as a while, reduced, so that motion video signals are efficiently transmitted.

Moreover, the read only memory 156 outputs a code length data DL1 representing a code length of the output data DV1 together with the data DV1.

After a remainder output circuit 160 performs division of the adding circuit 153 by a value 3, the data of remainder is outputted to the a read only memory circuit 162.

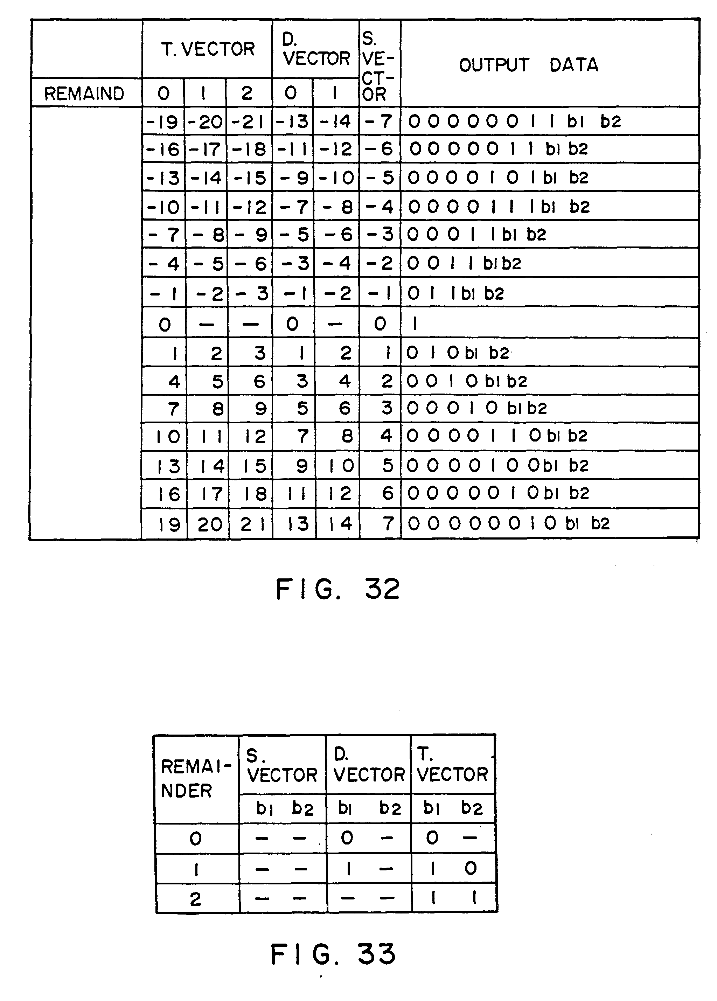

As shown in FIG. 31, the read only memory circuit 162 outputs a remainder data DV2 having a value 0 with a code length 1 in response to an input data having a value 0 whereas the read only memory circuit 162 outputs remainder data DV2 having values 10 and 11 with code length 2 for input data of values 1 and 2.

The input deta of the read only memory circuit 162 are remainders to which triple vectors have been converted per one frame, the triple vectors having undergone adding-and-subtracting operation in the adding circuit 153. Thus, the value 0 has the largest appearance probability, and the appearance probability becomes smaller as the value grows.

Accordingly, in this embodiment, the amount of data necessary for sending motion vectors is reduced as a whole by outputting remainder data DV2 having the shortest code length, and thereby moving picture video signals are efficiently transmitted.

The read only memory circuit 162 outputs a code length data DLL2, representing the code length of the remainder data DV2, synchronously with the remainder data DV2.

A selection circuit 164 switches its contacts synchronously with the selection circuit 150 to select and output the least significant bit of the output data outputted from the adding circuit 151 and remainder data DV2.

That is, the selection circuit 164 stops the selective outputting with respect to a single vector.

The selection circuit 164 outputs data of the least significant bit inputted in response to a double vector. Thus, the selection circuit 164 selectively outputs to a parallel-serial conversion circuit 166 a selected output having a value of 1 when the double vector has an even value whereas it outputs a selected output of a value 0 to the parallel-serial conversion circuit 166 when the double vector has an odd value or a value 0.

The selection circuit 164 outputs a remainder data DV2 in response to a triple vector.

A selection circuit 168 receives input data DLL0 having a value 0 and DLL1 having value 1 and code length data DLL2, and the selection circuit 168 outputs code length data DL2 representing a code length of selected output data DJ outputted from the selection circuit 164.

An adding circuit 170 outputs the result of adding of the code length data DL1 and DL2 to the parallel-serial conversion circuit 166.

As illustrated in FIG. 32, the parallel-serial conversion circuit 166 adds the output data DJ of the selection circuit 164 and the addition data of the adding circuit 170 to the output data DV1 of the read only memory 156 and then converts the resulting data to a serial data.

Thus, in response to the single vector, the output data DV1, outputted from the read only memory 156, and the code length data DL1 of the output data DV1 are converted to serial data and then outputted through the parallel-serial conversion circuit 166.

In response to the double vector which has an even value, a remainder bit b₁ having a value 0 is added to the output data DV1, outputted from the read only memory 156; an addition data, having a value 1 added to resultant data is then converted to serial data.

When the double vector has an odd value or a value 0, the remainder bit b₁ of a value 1 is added to the output data DV1; an addition data, having a value 1 added to the code length data DL1, is further added; and the resultant data is then converted to serial data.

In response to the triple vector which has a value of 0 or a value ±(3n + 1) (n = 0, 1, 2, ...), the remainder bit b₁ of a value 0 is added to the output data DV1; an addition data, having a value 1 added to the code length data DL1, is further added; and the resultant data is then converted to serial data.

When the triple vector has a value e ±(3n + 2) (n = 0, 1, 2, ...), the remainder bits b₁ and b₂ having values 1 and 0, respectively, are added to the output data DV1; an addition data, having a value 2 added to the code length data DL1, is further added; and the resultant data is then converted to serial data. When the triple vector has a value ±(3n + 3) (n = 0, 1, 2, ...), the remainder bits b₁ and b₂ having values 1 and 1, respectively, are added to the output data DV1; an addition data, having a value 2 added to the code length data DL1, is further added; and the resultant data is then converted to serial data.

Thus, on the side of the object to be transmitted it is possible to judge whether or not the data of the motion vector thus variable length coded is a single, a double or a triple vector with reference to forward prediction reference index PID, backward prediction reference index NID and temporary index TR, and the motion vector can be decoded on the basis of the result of the judgement.

Thus, single, double and triple vectors can be variable coded with a preference to a vector having the highest appearance probability by using a kind of table stored in the read only memory 156, and thereby motion vectors can be optimized with a simple construction.

The motion vectors can be transmitted by such coding processing with a detected accuracy maintained, and video signals can be efficiently sent with degradation in picture quality being effectively avoided.

### (2-5) Adaptive Prediction Circuit

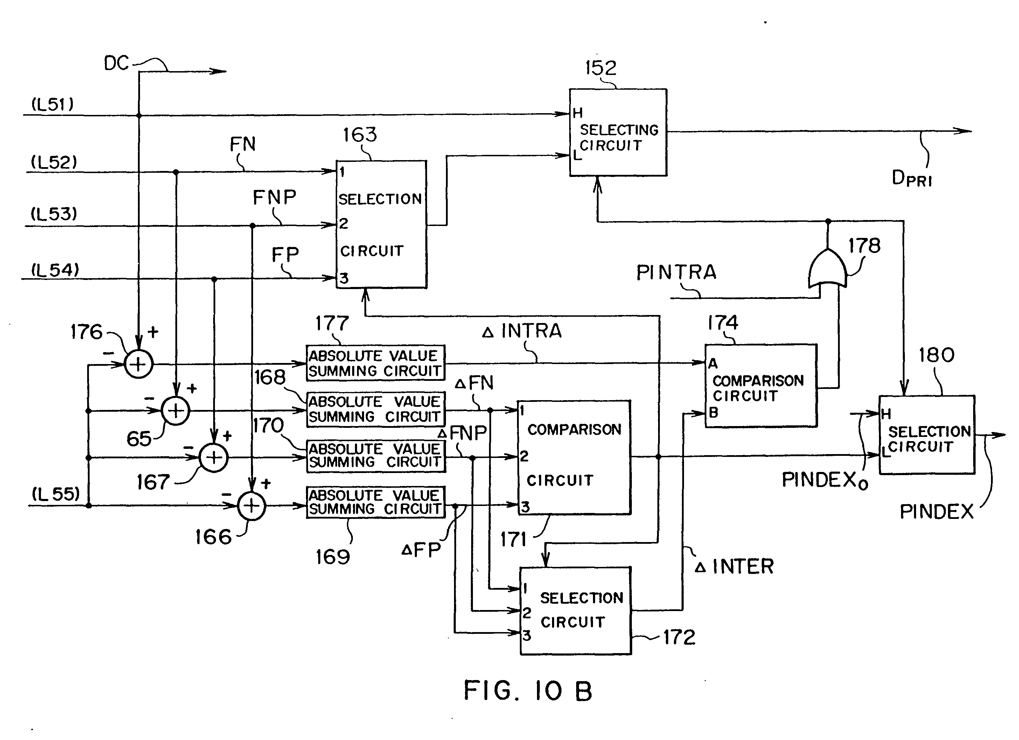

As illustrated in FIG. 10, an adaptive prediction circuit 10 selectively predict frame data B3, C1, C2, C4, and C5 with reference .to the forward prediction reference index PID, backward prediction reference index NID and temporary index TR.

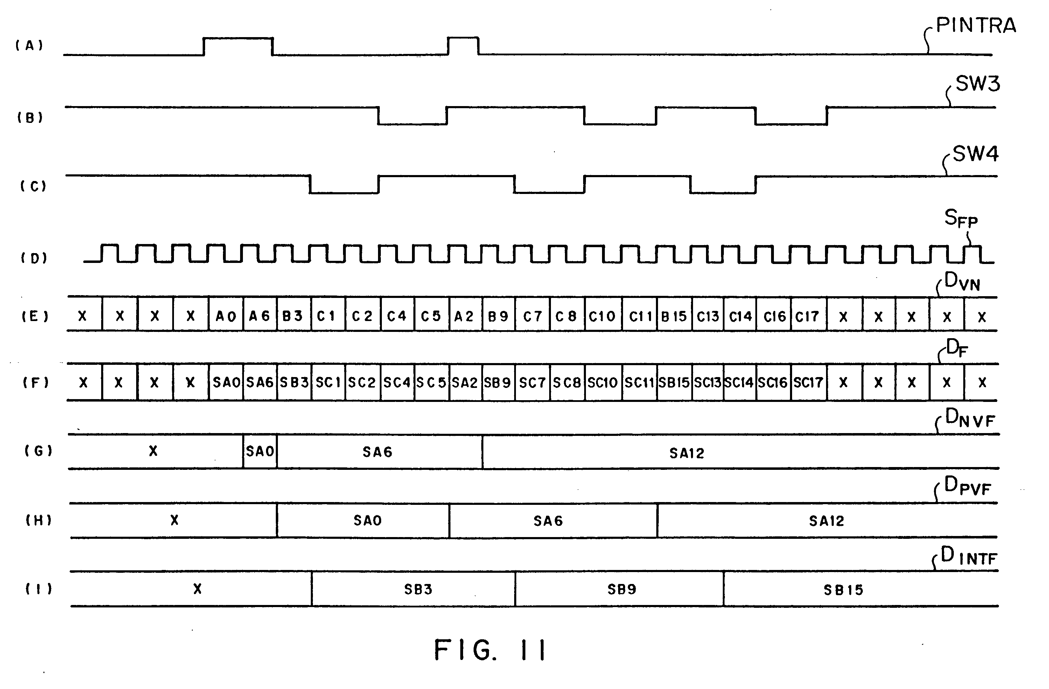

More specifically, in adaptive prediction circuit 10 read only memory circuits 142, 143 and 144 receive the temporary index TR as shown in FIG. 11 to generate intraframe coding processing control data PINTRA (FIG.11(A)), interframe coding processing control data WB3 and WC5, respectively.

Read only memory circuits 146 and 147 receive forward prediction reference index PID and backward prediction reference index NID to generate switching control data SW3 and SW4 (FIG. 11(B) and (C)) of which logic levels fall when the values of forward prediction reference index PID and backward prediction reference index NID are 0.

An OR circuit 148 receives intraframe coding processing control data PINTRA and interframe coding processing control data WC5 to produce frame memory control data WAP.

Thus the adaptive prediction circuit 10 is designed to operate on the basis of control data generated in the read only memory circuits 142 to 147 and the OR circuit 148.

A mean value memory circuit 150 receives picture data D_{VN} (FIG. 11(E)), which is outputted from the motion vector detecting circuit 6 synchronously with the frame pulse signal S_{FP} (FIG. 11(D)), to obtain mean value of picture data of luminance signals and chrominance signals for each macro unit block, and then the mean value data are outputted to the transmission data composition circuit 32 (FIG. 3) as direct current data DC.

In addition, the mean value memory circuit 150 outputs direct current data DC of frame data A0, A6, ... as predicted data D_{PRI} to the subtracting circuit 8 (FIG. 3) through selecting circuit 152 at the timing of inputting frame data A0, A6, ... to be intraframe processed to the subtracting circuit 8.

Thus, difference data D_{Z} from the mean value of the picture data D_{VN} can be obtained about frame data A0, A6, ... through the subtracting circuit 8, and after subsequently data compressed through the discrete cosine transformation circuit 12, the multiplication circuit 14, the requantizing circuit 18 and the run-length Huffman encoding circuit 30, the difference data D_{Z} is outputted to the transmission data composition circuit 32.

On the other hand, a backward prediction frame memory circuit 154, forward prediction frame memory circuit 155 and interframe memory circuit 156 receive picture data D_{F} (FIG. 11(F)), reconstructed in the adding circuit 28, and store frame data of predicted frames which serve as references of the backward and forward prediction.

That is, the backward prediction frame memory circuit 154 enters picture data D_{F} into it when intraframe coding processing control data PINTRA rises.

Thus, through the backward prediction frame memory circuit 154, there can be provided picture data D_{NVF} (FIG. 11(G)) in which after frame data SA0 which is reconstructed for one frame cycle is outputted, frame data SA6 similarly reconstructed continues for subsequent 6 frame cycles, and then frame data SA12 reconstructed lasts for subsequent 12 frame cycles.

On the other hand, the forward prediction frame memory circuit 155 enters frame data which is outputted from the backward prediction frame memory circuit 154 when the frame memory control data WAP rises.

Thus, through the forward prediction frame memory circuit 155, there can be provided picture data D_{PVF} (FIG. 11(H)) in which the reconstructed frame data SA0 lasts for the first 5 frame cycles among 6 frame cycles, during which reconstructed frame data SA6 is outputted from the backward prediction frame memory circuit 154. The reconstructed frame data SA6 continues for subsequent 6 frame cycles, and then the frame data SA12 reconstructed lasts for subsequent 12 frame cycles.

The interframe memory circuit 156 enters picture data D_{F} into it when interframe coding control data WB3 rises.

In this manner, picture data D_{INTF} (FIG. 11(I)) is obtained through the interframe memory circuit 156, the picture data D_{INTF} having reconstructed fourth frame data SB3, SB9 and SB15 each lasting for 6 frame cycles.

Selection circuits 158 and 159 receive picture data D_{NVF}, D_{INTF} and D_{PVF} D_{INTF} and switch their contacts according to switching control data SW4 and SW3, so that frame data SA0, SA6, SB3, ... which are referred to for forward and backward prediction are sequentially outputted to following variable reading memorycircuits 160 and 161.

That is, the selection circuits 158 and 159 output reconstructed frame data SA6 and SA0 to the variable reading memory, circuits 160 and 161 at the timing of inputting the fourth frame data B3 of the group of frames to the adaptive prediction circuit 10.

Then, the selection circuits 158 and 159 output reconstructed frame data SB3 and SA0 to the variable reading memory circuits 160 and 161 at the timing of inputting the second and the third frame data C1 and C2 of the group of frames to the adaptive prediction circuit 10 whereas the selection circuits 158 and 159 output reconstructed frame data SA0 and SB3 at the timing of inputting of the fourth and the fifth frame data C4 and C5.

Variable reading memory circuits 160 and 161 shift inputted frame data by amount of motion vectors MVN and MVP detected in the motion vector detecting circuit 6 and then outputs them to a selection circuit 163.

Thus, the backward prediction frame data FN and forward prediction frame data FP (FIG. 1) can be obtained through the variable reading memory circuits 160 and 161 by displacing the reconstructed frame data by a distance of the motion vector MVN and MVP and by outputting them, respectively.

On the other hand, an adding circuit 164 adds frame data outputted from the variable reading memory circuits 160 and then outputs them to the selection circuit 163 through the halving circuit 165.

Thus, interpolative predicted result frame data FNP (FIG. 1) which linearly interpolates backward predicted result frame data FN and forward result frame data FP can be obtained through the halving circuit 165.

Subtracting circuits 165, 166 and 167 subtract frame data, outputted from the variable reading memory 160, the variable reading memory 161 and the halving circuit 165 from frame data which are picture data D_{VN}, respectively.

Thus, the backward prediction difference data ΔFN, the forward prediction difference data ΔFP and the interpolative prediction difference data △FNP (FIG. 1) can be obtained for each macro unit block through subtracting circuits 165, 166 and 167, respectively.

Absolute value adding circuits 168, 169 and 170 change difference data, outputted from the subtracting circuits 165, 166 and 167, to absolute values, which are accumulated for each macro unit block and then outputted.

The backward prediction difference data ΔFN, the forward prediction difference data ΔFP and the interpolative prediction difference data ΔFNP (FIG. 1) can be detected in amount of data through absolute value adding circuits 168, 169 and 170, respectively.

A comparison circuit 171 receives the sum of absolute value of each of the difference data △FN, △FP and △FNP to detect a minimum value thereof.

In addition, the comparison circuit 171 outputs a control signal to the selection circuit 163, and thereby backward predicted result frame data FN, forward predicted result frame data FP or interpolative predicted result frame data FNP of which difference data ΔFN, ΔFP or ΔFNP is a minimum in amount of data is selected and outputted to the selecting circuit 152.

Thus, in the intraframe coding processing, mean values of frame data A0 and A6 are outputted as predicted data D_{PRI} to the subtracting circuit 8 through the selecting circuit 152 whereas in the intraframe coding processing, frame data FN, FP or FNP, of which difference data △FN, △FP or ΔFNP is a minimum in the amount of data, is selected for each macro unit block as predicted data D_{PRI} and is outputted to the subtracting circuit 8.

Thus, the difference data D_{Z} between the selectively predicted, backward predicted result frame data FN, forward predicted result frame data FP, interpolative predicted result frame data FNP and frame data B3, C1, C2, ... to be encoded can be obtained. through the subtracting circuit 8 The difference data D_{Z} is sequentially data compressed through discrete cosine transformation circuit 12, multiplication circuit 14, requantizing circuit 18 and run-length Huffman encoding circuit 30 and is then outputted to the transmission data composition circuit 32.

A selection circuit 172 is controlled by a comparison circuit 171 to switch its contact, and thereby difference data ΔINTRA which is the smallest in the amount of data is selected from the difference data ΔFN, ΔFP and ΔFNP and outputted to a comparison circuit 174.

A subtracting circuit 176 receives picture data D_{VN} and direct current data DC and outputs the difference between them to an absolute value adding circuit 177.

Similarly with the absolute value adding circuits 168 to 170, an absolute value adding circuit 177 accumulates absolute values of inputted data for each macro unit block and then outputs the accumulated sum ΔINTER to the comparison circuit 174.

The comparison circuit 174 outputs a switching signal to each macro unit block on the basis of the result of comparison between the accumulated sum ΔINTER and the difference data ΔINTRA.

An OR circuit 178 receives the switching signal, outputted from the comparison circuit 174, and the intraframe coding processing control data PINTRA to control the contacts of the selecting circuit 152 to switch.

When in frame data B3, C1, C2, C4 and C5 which are assigned to be interframe coded, there is a macro unit block which may be sent in a smaller amount of data as a whole by intraframe coding processing, the comparison circuit 174 outputs a switching signal to the selecting circuit 152 through the OR circuit 178 according to the result of the comparison between the accumulated sum △INTER and the difference data ΔINTRA so that the intraframe coding processing is selected for the macro unit block.

That is, the accumulated sum ΔINTER is accumulated for each macro unit block after the difference data between the picture data D_{VN} and the direct current data DC is changed to an absolute value and hence the accumulated sum △INTER represents an amount of data when frame data B3, C1, C2, C4 and C5 assigned to be interframe coded are intreframe coded.

Thus, it is possible to judge by obtaining the result of comparison between the accumulated sum ΔINTER and the difference data ΔINTRA whether or not the intraframe coding processing of each macro unit block provides a smaller amount of data to be transmitted. Even frame data B3, C1, C2, C4 and C5 which are assigned to be interframe coded may be sent in a smaller amount of data on basis of that result of comparison as a whole by intraframe coding processing macro unit blocks thereof.

As shown in FIG. 12, the selecting circuit 152 selects and outputs direct current data DC when in frame data B3, C1, C2, C4 and C5 which are assigned to be interframe coded, there is a macro unit block which may be sent in a smaller amount of data as a whole by intraframe coding processing. Thus, transmission frame picture data of the macro unit block which has been intraframe coded is transmitted to a destination of transmission.

In this operation, the comparison circuit 174 preferentially selects the intraframe coding processing within a range where the amount of data of each of the accumulated sum △ INTER and the difference data ΔINTRA is small, and thereby error transmission can be effectively avoided and a high quality video signal can be transmitted.

The transmission of video signals interframe coded has a problem in that error transmission cannot be avoided when a transmission error is generated in frame data which are referred to for the interframe coding processing.

Accordingly, even frame data B3, C1, C2, C4 and C5 which are assigned to be interframe coded are preferentially intraframe coded for transmission not only when a small amount of data as a whole is transmitted by the intraframe coding processing as described but also when a small amount of data is provided both the intraframe coding processing and the interframe coding processing, thereby increase of amount of data and error transmission can be effectively avoided and a high quality video signal can be transmitted.

A selection circuit 180 receives and selectively outputs the output data (which is an identification data having one of values 1, 2 and 3 representing the backward prediction, the forward prediction or the interpolative prediction, respectively) of the comparison circuit 171 and identification index PINDEX₀ (which in this case is an identification data of a value 0) indicating a macro unit block intraframe coded according to the output signal of the OR circuit 178, and thereby identification data PINDEX representing the selectively predicted prediction result can be obtained through the selection circuit 180.

### (2-6) Transmission Data Composition Circuit

Synchronously with the frame pulse signal S_{FP}, the transmission data composition circuit 32 outputs output data of the run-length Huffman encoding circuits 30 and 34, the prediction index PINDEX, the forward prediction reference index PID, the backward prediction reference index NID, temporary index TR, frame group index GOF, control information of weighting control circuit 16 and data amount control circuit 20 to the reordering circuit 33 in a predetermined format and thereby transmission frame data DATA is constructed.

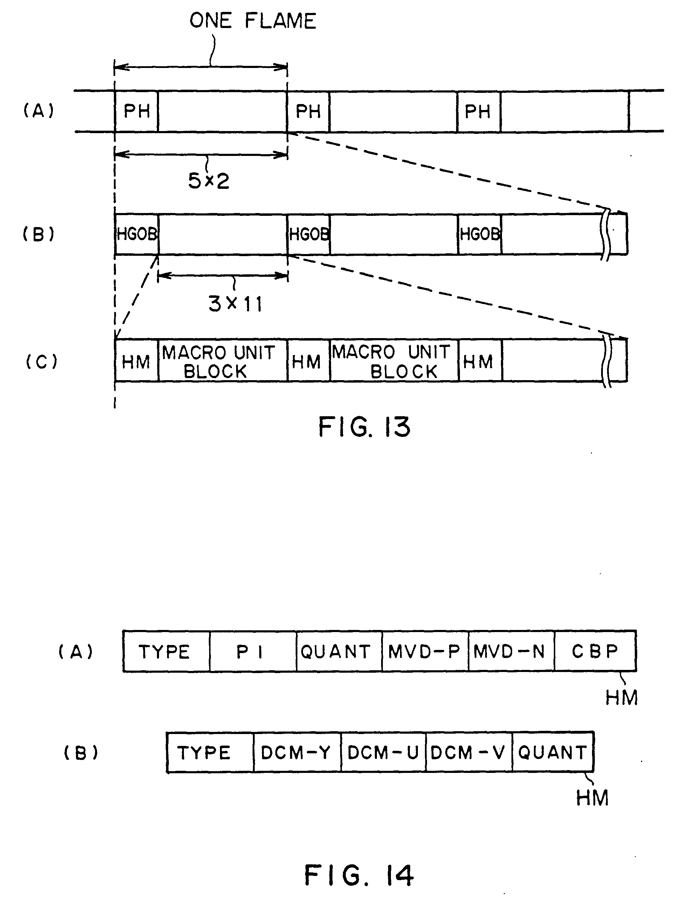

That is, as shown in FIGS. 13 and 14, the transmission data composition circuit 32 adds a macro unit header HM to picture data which is outputted in unit of a macro unit block from the run-length Huffman encoding circuit 30 (FIG. 13(C)).

With respect to the frame data intraframe coded, a predictive index PI (which is produced with reference to the identification data PINDEX) representing the intraframe coding processing, the backward prediction processing, the forward prediction processing or the interpolative prediction processing is added to the macro unit header HM to follow a header TYPE for identifying each macro unit block (FIG. 14(A)).

In addition, according to the control information of the data amount control circuit 20, data QUANT which represents quantized stepsize of each macro unit block is added and then motion vector data MVD-P and MVD-N which represent the forward prediction motion vector and backward prediction motion vector, respectively, are added.

With respect to luminance signals Y₁, Y₂, Y₃, Y₄ and chrominance signals C_{R}, C_{B} assigned to a macro unit block, additional data CBP representing whether those signals have or not data to be transmitted, is added.

On the other hand, in the macro unit blocks of frame data to be interframe coded (FIG. 14(B)), the header TYPE for identifying each macro unit block is followed by the luminance signal detected in the adaptive prediction circuit 10, DC level data DCM-Y, DCM-U and DCM-V (DC) of the chrominance signal, and then data QUANT representing a quantized stepsize is added.

Thus, each macro unit block can be decoded on the basis of the macro unit header HM by adding a macro unit header HM for each macro unit block.

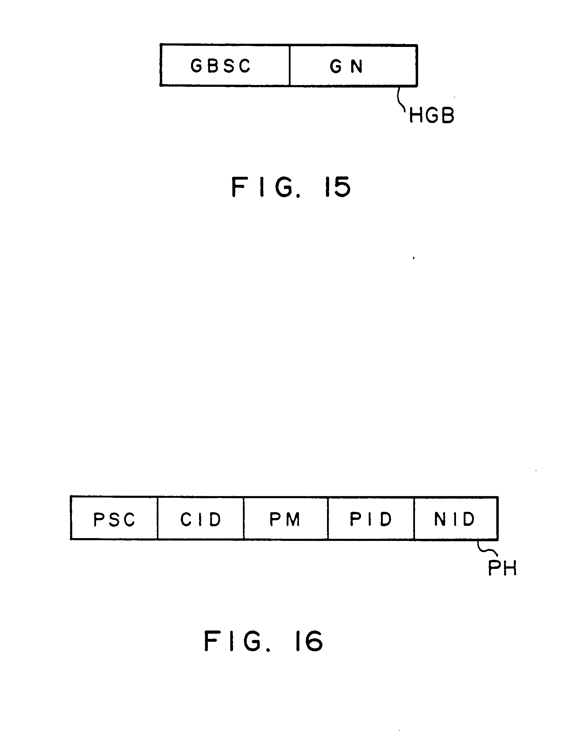

On the other hand, a group of block units (FIG. 13(B)) is constructed by placing macro unit blocks in 3 columns and 11 rows, and as illustrated in FIG. 15, a group-of-block-unit header HGOB is added at the head of each group of block units.

The group-of-block-unit header HGOB includes an identification header GBSC representing the start of each group of block units, followed by identification header GN for identifying the group of block units.

Then, a frame of transmission frame data is constructed by assembling groups of block units in 5 columns and 2 rows (FIG. 13(A)), and a picture header PH is added at the head of each transmission frame data.

As shown in FIG. 16, in the picture header PH a start index PSC representing the head of each group of frame is added with reference to a frame group index GOF outputted from the motion vector detecting circuit 6, and subsequently a current index CID representing the sequence of frame data in each group of frames is added with reference to the temporary index TR.

Moreover, a mode index PM for identifying the intraframe coding processing, the interframe coding processing at the level 1 or the interframe coding processing at the level 2 is added, and then forward prediction reference index PID and backward prediction reference index NID are added.

Thus, for each transmission frame data a mode index PM, identifying the intraframe coding processing, the interframe coding processing at the level 1 or the interframe coding processing at the level 2, is added as well as the forward prediction reference index PID representing frame data for forward prediction and backward prediction, and the backward prediction reference index NID. Thus, the transmission frame data are easily decoded with reference to forward prediction reference index PID, backward prediction reference index NID and mode index PM.

In this manner, the receiving unit not only decodes the transmission frame data with ease but also easily decodes it even when it is transmitted in a format different in the length of group of frames, processed frames at levels 1 and 2, etc, from the format of this embodiment. Thus, the moving picture transmission system is as a whole enhanced in operability, and high quality video signals can be transmitted with ease.

### (2-7) Structure of the Receiving Unit

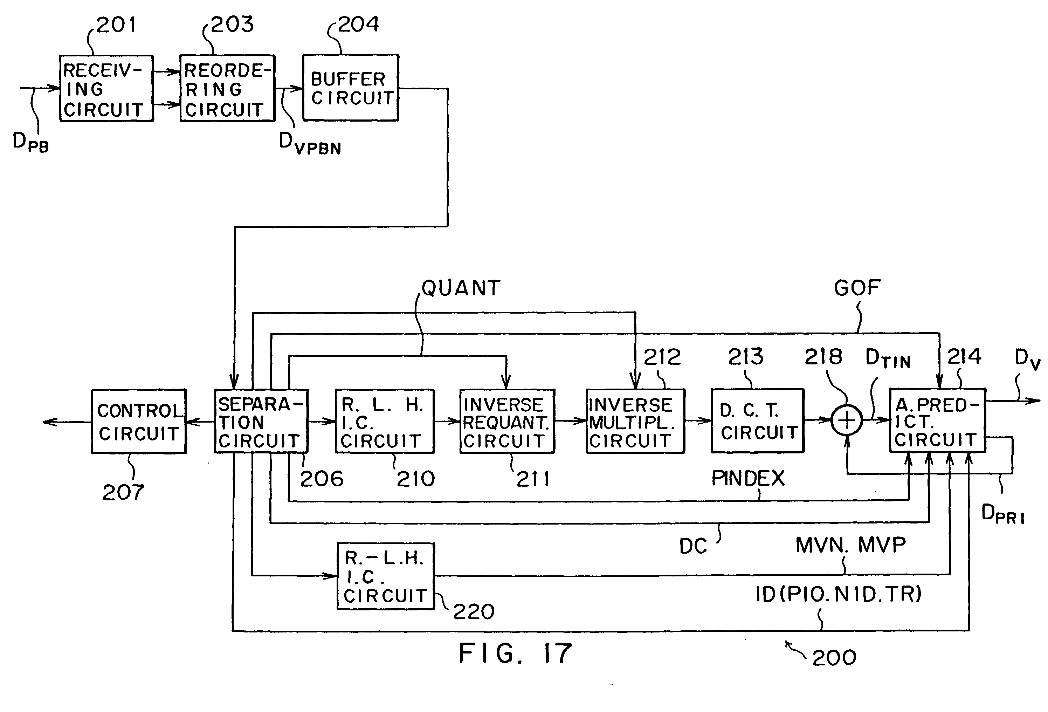

In FIG. 17, 200 generally designates a receiving unit, and reconstructed data D_{PB} which are obtained by reproducing a compact disc are received by a receiving circuit 201.

The receiving circuit 201 detects the head of each group of frames with reference to the start index PSC and then outputs the result of the detection together with the picture data D_{VPB}.

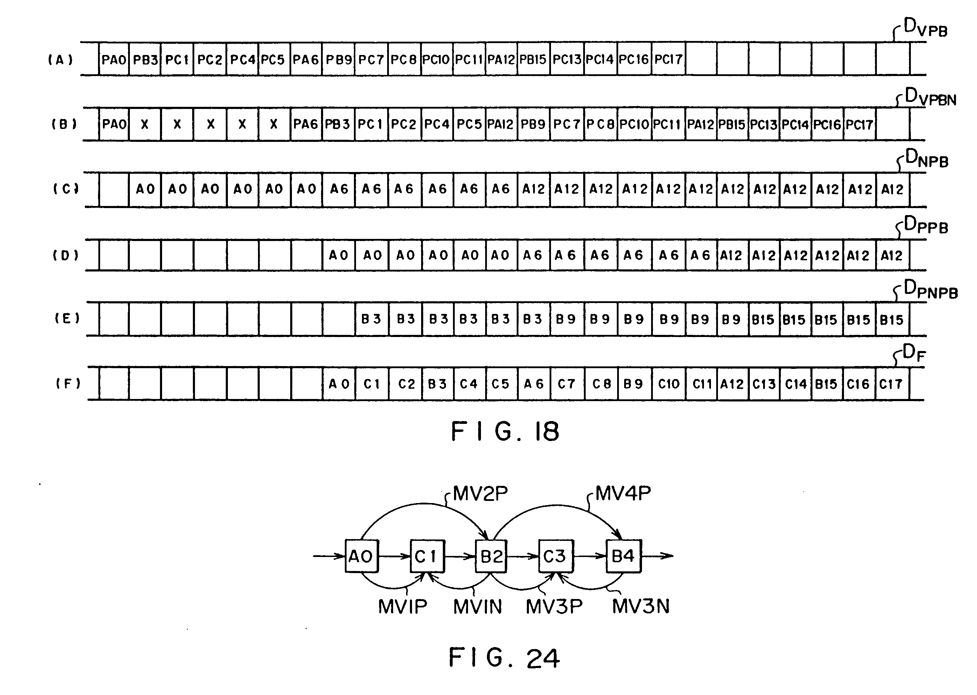

As shown in FIG. 18, a reordering circuit 203 is provided by this operation with a picture data D_{VPB} (FIG. 18(A)) having continuous frame data PA0, PB3, PC1, PC2 ... sequentially intraframe coded or interframe coded.

The reordering circuit 203 outputs transmission frame data PB3, PC1, PC2 ... interframe coded with a delay of 7 frame cycles. Thus, the reordering circuit 203 reorders frame data PA0, PB3, PC1, PC2 ... in the sequence of the intraframe coding processing and interframe coding processing performed in the transmitting unit 1 (that is, the same sequence as a sequence of decoding) and outputs them (FIG. 18(B)).

A buffer circuit 204 stores the picture data D_{VPBN} outputted from the reordering circuit 203 and then outputs it to a subsequent separation circuit 206 at a predetermined transmission rate.

The separation circuit 206 reconstructs the frame group index GOF, the forward prediction reference index PID, the backward prediction reference index NID, the temporary index TR, the prediction index PINDEX, the data DC (DCM-Y, DCM-U, DCM-V), QUANT, the motion vector data MVD-P and MVD-N with reference to the picture header PI, the group of block unit header HGOB and the macro unit header HM, and then the separation circuit 206 outputs them to predetermined circuits.

The separation circuit 206 outputs the picture header PI, group-of-block-unit header HGOB and macro unit header HM to a control circuit 207 at this time, so that the control circuit 207 obtains reconstructed data, having continuous frame data for each group of frames, by controlling a compact disc drive reproducing system.

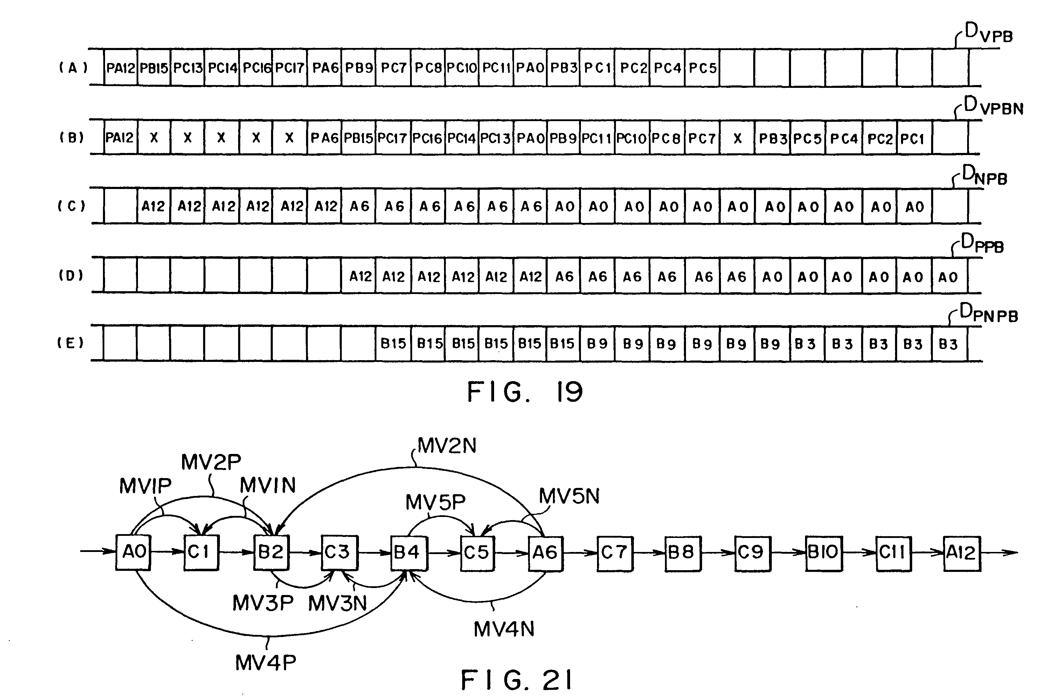

That is, in normal reproduction mode, data which are sequentially recorded on the compact disc are, as described in connection with FIG. 18, reproduced to obtain the picture data D_{VPBN} (FIG. 19(B)).

In reverse reproduction mode, an optical pickup is moved in a direction reverse to a direction in the normal reproduction mode while the compact disc being rotated in the same direction as in the normal reproduction. Thus, a picture data D_{VPBN}, which arranges groups of frames in an order reverse to the order in the normal reproduction, is obtained (FIG. 19(A)).

In recording, the first group of frames (PA0-PC5) is inputted to the receiving unit 200 and then the second group of frames (PA6-PC11) and the third group of frames (PA12-PC17) are continuously inputted whereas in the reverse reproduction, the third group of frames (PA12-PC17) is inputted and is followed by the second group of frames (PA6-PC11) and the first group of frames (PA0-PC5).

Since the reordering circuit 203 delays frame data interframe coded 7 frame cycles, the frame data PA6 is delayed by 6 frame cycles from the frame data PA12, and then subsequent frame data (PB15-PC17) follow the frame data PA12, and subsequent frame data (PB9-PC11) follow the frame data PA0 and frame data PA6 (FIG. 19(B)).

Also in the reverse reproduction mode as in the normal reproduction mode, frame data are arranged through the reordering circuit 203 so that continuous frame data intraframe coded are continuously followed by frame data processed at the levels 1 and 2, and then by frame data intraframe coded.

Thus, in this embodiment, the frame group index GOF, the forward prediction reference index PID, the backward prediction reference index NID, the temporary index TR etc. are added to each of the frame data and transmitted, and hence transmission frame data can be easily decoded also in the reverse reproduction as in the normal reproduction by subsequently decoding them in the subsequent run-length Huffman inverse coding circuit 210, inverse requantization circuit 211, inverse multiplying circuit 212, discrete cosine inverse transformation circuit 213 and prediction circuit 214 with reference to these indexes.

The separation circuit 206 removes picture header PI, group-of-block-unit header HGOB and macro unit header HM from the picture data D_{VPBN} and then outputs them to the run-length Huffman inverse coding circuit 210.

The run-length Huffman inverse coding circuit 210 performs a processing inverse to the processing of run-length Huffman coding circuit 30 (FIG. 3), so that the inputted data of the run-length Huffman coding circuit 30 are reproduced in the receiving unit 200.

An inverse requantization circuit 211 receives output data of the run-length Huffman inverse coding circuit 210 and data QUANT, representing the quantized stepsize added to each of the macro unit header HM, and performs inverse requantizing processing as in the inverse requantizing circuit 22 (FIG. 3) to thereby reproduce the input data of the requantizing circuit 18 in the receiving unit 200, the inverse requantizing processing performing inverse to the processing of the requantizing circuit 18.

On the other hand, the inverse multiplying circuit 212 receives output data of the inverse requantization circuit 211 and performs inverse multiplication operation inverse to the operation of the multiplying circuit 14 (FIG. 3) with reference to data added to the each macro unit header HM to thereby reconstruct input data of the multiplying circuit 14 in the receiving unit 200.

The discrete cosine inverse transformation circuit 213 performs inverse transformation on output data of the inverse multiplying circuit 212, the inverse transformation being inverse to the transformation of the discrete cosine transformation circuit 12 (FIG. 3). Thus, input data of the discrete cosine transformation circuit 12 is reconstructed.

The adding circuit 218 adds predicted data D_{PRI}, outputted from the adaptive prediction circuit 214, to output data of the discrete cosine inverse transformation circuit 213 and outputs it to the adaptive prediction circuit 214.

The run-length Huffman inverse coding circuit 220 decodes the forward prediction motion vector MVP and the backward prediction motion vector MVN which have been variable length coded in the run-length Huffman coding circuit 34 of the transmitting unit 1 and outputs them to the adaptive prediction circuit 214.

The adaptive prediction circuit 214 reconstructs predicted data D_{PRI}, outputted from the adaptive prediction circuit 10 of the transmitting unit 1, with reference to output data D_{TIN} of the adding circuit 218 and motion vectors MVP and MVN, etc.

In this manner, the original frame data transmitted can be reconstructed, and hence video data D_{V} can be reconstructed, through the adaptive prediction circuit 214.

That is, the adaptive prediction circuit 214 outputs a direct current level data DC to the adding circuit 218 as a prediction data D_{PRI} with respect to frame data A0, A6 intraframe coded.

Thus, the frame data A0, A6 intraframe coded are reconstructed through the adding circuit 218.

Similarly with the adaptive prediction circuit 10 of the transmitting unit, the adaptive prediction circuit 214 includes a forward prediction frame memory circuit, backward prediction frame memory circuit and an interframe memory circuit and stores frame data A0, A6 reconstructed in the forward frame memory circuit and the backward prediction frame memory circuit (FIGS. 18(C) and (D)) to generate a predicted data of the frame data a B3.

Thus, the frame data B3 interframe coded at the level 1 can be reconstructed through the adding circuit 218.

Moreover, the adaptive prediction circuit 214 stores the frame data B3 reconstructed in the interframe memory circuit (FIG. 18(E)) to produce frame data D_{PRI} of the frame data C1, C2, C4 and C5, and thereby the frame data C1, C2, C4 and C5 interframe coded at the level 2 can be reconstructed through the adding circuit 218.

In addition, the adaptive prediction circuit 214 rearranges and outputs reconstructed frame data A0, A6, B3, ... in the original order (FIG. 18(F)).

The receiving unit 200 includes an interpolating circuit (not shown) and reconstructs the original input video signal VD_{IN} by a technique of interpolative operation with reference to frame data reconstructed.

Thus, video signals which are highly efficiently coded and recorded on a compact disc are reconstructed.

### (2-8) Adaptive Prediction Circuit

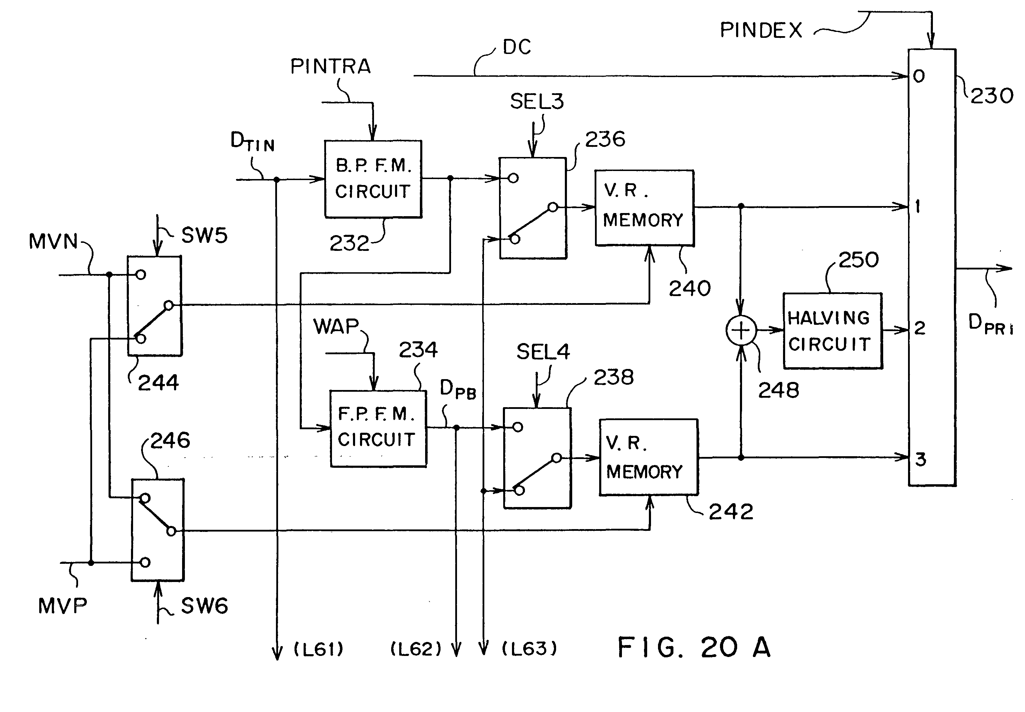

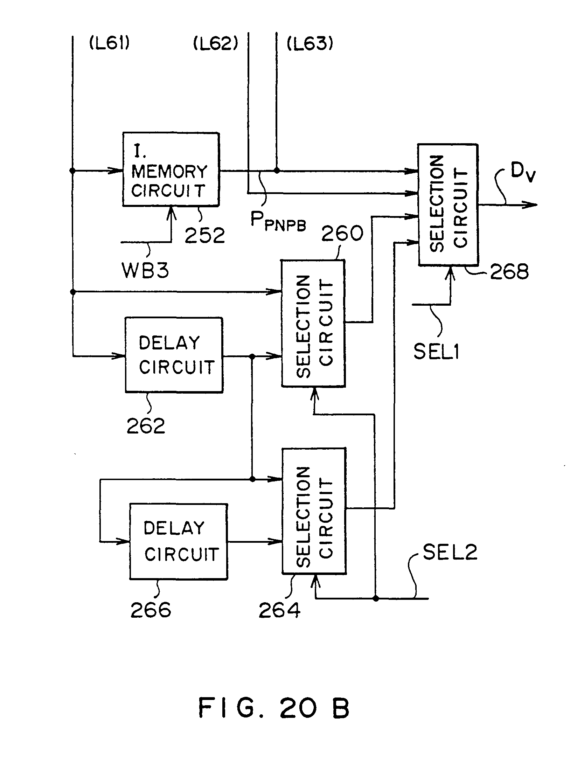

As shown in FIG. 20, the adaptive prediction circuit 214 constructs predicted data D_{PRI} with reference to the forward prediction reference index PID, the backward prediction reference index NID, the temporary index TR and the direct current level data DC which have been separated in the separation circuit 206.

More specifically, the adaptive prediction circuit 214 provides the direct current level deta DC to a selection circuit 230 which switches its contact with reference to the decoded identification data PINDEX (identification data of a macro unit block which has undergone the backward prediction processing, the forward prediction processing, the interpolative prediction processing and the interframe coding processing). The adaptive prediction circuit 214 outputs the direct current level data DC to the adding circuit 218 at the timing of inputting frame data of intraframe coded macro unit block to the adding circuit 218.

That is, the direct current level data DC is subsequently outputted as the predicted data D_{PRI} in unit of a macro unit block for each of intraframe coded frame data PA0, PA6, ....

In addition, with respect to the macro unit block which has been preferentially intraframe coded in spite of assignment of the interframe coding processing, the direct current level data DC is outputted to the adding circuit 218.

Thus, with respect to intraframe coded frame data PA0, PA6, ... and macro unit blocks, on which the intraframe coding processing has been preferentially selected although the interframe coding processing has been assigned, the original data can be reconstructed by adding output data of the discrete cosine inverse transformation circuit 213 and the predicted data D_{PRI} through adding circuit 218.

The adaptive prediction circuit 214 provides the output data D_{TIN} thus reconstructed in the adding circuit 218 to a a backward prediction frame memory circuit 232 and a forward prediction frame memory circuit 234 and reconstructs predicted data D_{PRI} of subsequent frame data.

The backward prediction frame memory circuit 232 and the forward prediction frame memory circuit 234 are switched to writing mode with reference to the intraframe coding processing control data PINTRA and the frame memory control data WAP, respectively, and thereby the leading frame data A0 of the frame group in the reconstructed frame data is stored in the forward prediction frame memory circuit 234 and the frame data A6 of the subsequent group of frames is stored in the backward prediction frame memory circuit 232 (FIGS. 18 (C) and (D)).

The selection circuits 236 and 238 switch their contacts in response to switching signals SEL3 and SEL4 produced with reference to intraframe coding processing control data PINTRA, respectively, and thereby output frame data, stored in the backward prediction frame memory circuit 232 and forward prediction frame memory circuit 234, as backward prediction and forward prediction frame data to subsequent variable reading memory circuits 240 and 242, respectively.

The variable reading memory circuits 240 and 242 receive motion vectors MVN and MVP for each macro unit block through the selection circuits 244 and 246 and shift backward prediction frame data and forward prediction frame data by amount of motion vectors MVN and MVP, respectively.

Thus, the frame data of the results of the backward prediction and the forward prediction can be obtained about frame data B3 and B9 to be interframe coded at the level 1 1 through the variable reading memory circuits 240 and 242, respectively, and the frame data obtained are outputted to the selection circuit 230.

An adding circuit 248 adds frame data outputted from the variable reading memory circuits 240 and 242 and outputs the added frame data to the selection circuit 230 through a halving circuit 250.

Thus, in the selection circuit 230 the direct current level DC with respect to intraframe coded macro unit blocks of frame data B3 and B9 is inputted to the first input terminal 0 while frame data of the results of the backward prediction, the interpolative prediction and the forward prediction are inputted to the second input terminal 1, the third input terminal 2, and the fourth input terminal 3, respectively.

Thus, with respect to the frame data of B3 and B9, assigned to the level 1 processing, predicted data D_{PRI} can be reconstructed by selectively outputting the input data of the first to the fourth input terminals 0-3 on the basis of the identification data PINDEX in the selection circuit 230.

Accordingly, frame data PB3, PB9, which are sent subsequently to the frame data PA0 and PA6, is decoded by adding the predicted data D_{PRI}, outputted to the adding circuit 218, to the output data of the discrete cosine inverse transformation circuit 213, so that the original data can be reconstructed.

An interframe memory 252 receives output data D_{TIN} of the adding circuit 218 on the basis of the interframe coding processing control data WB3, and among the frame data reconstructed in the interframe memory 252, frame data B3 and B9 processed at the level 1 are thereby stored.

Thus, similarly with recording, frame data B3, which are predicted frames of the frame data C1, C2, C4 and C5 can be obtained through the interframe memory 252 during a period that the frame data C1, C2, C4 and C5 to be processed at the level 2 last (FIG. 18(E)).

Thus, frame data B3 and A0 are outputted to the variable reading memory circuits 240 and 242 through the selection circuits 236 and 238, and thereby frame data of the results of the backward prediction, the forward prediction and the interpolative prediction can be obtained through the variable reading memories 240, 242 and the halving circuit 250, respectively.

Accordingly, predicted data D_{PRI} about frame data C1 and C2 can be reconstructed through the selection circuit 230, and thereby the frame data C1 and C2 can be reconstructed in the adding circuit 218.

On the other hand, frame data A6 and B3 are outputted to the variable reading memory circuits 240 and 242 through the selection circuits 236 and 238 during a period of two frame cycles following the frame data C1 and C2, and frame data of the results of the backward prediction, the forward prediction and the interpolative prediction can be obtained through the variable reading memory circuits 240, 242 and halving circuit 250.

Consequently, predicted data D_{PRI} about the frame data C4 and C5 can be reconstructed through the selection circuit 230, and thereby the frame data C4 and C5 can be reconstructed in the adding circuit 218.

Thus, frame data subsequently reconstructed are outputted as added data D_{TIN} from the adding circuit 218.

The output data of a delay circuit 262 is directly inputted to selection circuit 264 and is also inputted to the selection circuit 264 through the delay circuit 266.

Moreover, the selection circuits 200 and 264 switch their contacts according to switching signal SEL2 and output their selected outputs to a selection circuit 268.

The selection circuit 268 receives frame data, outputted from the forward prediction frame memory circuit 234 and the interframe memory circuit 252, other than the selected outputs of the selection circuits 260 and 264 and switches its contact according to the switching signal SEL1.

The switching signal SEL1 and SEL2 are generated according to the current index CID, added to each frame data and transmitted, and thereby frame data decoded are rearranged in the original order to reconstruct video data D_{V} (FIG. 18(F)).

Thus, frame data are sequentially intraframe coded and interframe coded in a state divided into predetermined groups of frames and then are transmitted, so that video signals can be efficiently transmitted with effectively avoided degradation of picture quality.

In this embodiment, the motion vectors MVN and MVP are outputted through the selection circuits 244 and 246, and thus, in reverse reproduction motion vectors MVN and MVP are switched and outputted to the variable reading memory circuits 240 and 242.

In the reordering circuit 203, frame data interframe coded are delayed for 7 frame cycles, so that in reverse reproduction, frame data PA6 is delayed 6 frame cycles relative to the frame data PA12 and is followed by frame data PB15-PC17, PA0, and PB9-PC11.

Thus, at the timing of inputting the frame data PB15, PB9 and PB8, which are the results of the level 1 processing, to the adding circuit 208, frame data A6 and A0 are stored in the backward prediction frame memory circuit 232 and frame data A12, A6 and A0 are stored in the forward prediction frame memory circuit 234 (FIG. 19(C) and (D)).

That is, frame data are stored in the backward prediction frame memory circuit 232 and the forward prediction frame memory circuit 234 in such a manner as to exchange positions of frame data in the case of normal reproduction.

Thus, in reverse reproduction, on the contrary to the normal reproduction, frame data of the results of the forward prediction and the backward prediction can be outputted from the variable reading memory circuits 240 and 242 by switching and outputting the motion vectors MVN and MVP to the variable reading memory 240 and 242, respectively.

Thus, in response to the switching of the motion vectors MVN and MVP, the switching operation of the selection circuit 230 is exchanged in the forward prediction and the backward prediction, and thereby the reverse reproduction can be carried out with a simple structure.

More specifically, since in transmitting frame data, data indicating the order of the predicted frames of the forward prediction, the backward prediction and the order in the group of frames are added and sent, also in the reverse reproduction the transmission frame data can be easily decoded as in the normal reproduction.

At the timing of inputting of frame data C1, C2, C4 and C5 to be processed at the level 2, predicted frames are stored in the backward prediction frame memory circuit 232 and the forward prediction frame memory circuit 234 in the exchanged state with frame data being stored in the interframe memory 252 (FIG. 19(E)). Also in this case, the reverse reproduction can be made with a simple structure by exchanging the switching operations of the motion vectors MVN and MVP and the selection circuit 230 in the forward prediction and the backward prediction.

Thus, the original video signals can be reproduced by the normal reproduction and the reverse reproduction.

### (3) Operation of the Embodiment

In the construction above, the input video signal VD_{IN} are converted to digital signals at the picture data inputting unit 2, the amount of data thereof is reduced to 1/4, and then the video signals are converted to video signals VD (FIG. 1(A)) having sequentially continuous frame data A0, C1, C2, B3, ... .

After frame data A0, C1, C2, B3, ... are divided into groups of frames consisting of units of 6 frames in the reordering circuit 4, the video signals VD are reordered in order to be coded, A0, A6, B3, C1, C2, C4, C5, ... (that is, frame data A0, A6 to be intraframe coded, frame data B3 to be interframe coded at the level I and frame data C1, C2, C4, C5 to be interframe coded at the level 2).

Moreover, the frame group index GOF, the forward prediction reference index PID, the backward prediction reference index NID and the temporary index TR representing the order in the group of frames are generated in the reordering circuit 4 and are outputted synchronously with the frame data A0, A6, B3, C1, C2, C4. .... .

After reordered in order to be encoded, A0, A6, B3, C1, C2, C4, C5, C7 ..., the frame data are outputted with the predetermined identification data GOF, PID, NID and TR added to them. Thus, the subsequent intraframe coding processing and interframe coding processing can be simplified.

The picture data D_{VN} reordered are outputted to the adaptive prediction circuit 10 at a predetermined timing after they are divided into macro unit blocks in the blocking circuit 84 of the motion vector detecting circuit 6.

Among the picture data D_{VN} reordered, frame data A0, A6 and A12 which are each of leading frame data to be intraframe coded are directly outputted to the subtracting circuit 8.

The frame data A0, A6 and B3 are respectively stored in the forward prediction frame memory circuit 89, the backward prediction frame memory circuit 88 and the interframe memory circuit 90 to serve as references for detecting the motion vectors of the backward prediction and the forward prediction.

That is, the frame data A0 and A3 which are stored in the forward prediction frame memory circuit 89 and the interframe memory circuit 90 are outputted to the variable reading memory circuits 94 and 96, and with respect to picture data of the frame data C1 and C2 picture data within a predetermined motion vector detecting range are outputted to subtraction circuits KN₀ to KN₂₅₅ and KP₀ to KP₂₅₅ in a parallel manner at the time of inputting the frame data C1 and C2 to the subtraction circuits KN₀ to KN₂₅₅ and KP₀ to KP₂₅₅.

The absolute results of the subtraction of the subtraction circuits KN₀ to KN₂₅₅ and KP₀ to KP₂₅₅ are accumulated for each macro unit block in the absolute value summing circuits 100 and 101, and thereby difference data are obtained when predicted frames are sequentially shifted within the motion vector detecting range about the each of the macro unit blocks of frame data C1 and C2.

Similarly, the frame data B8 and A6 which are stored in the interframe memory circuit 90 and the backward prediction frame memory circuit 88 are outputted to the variable reading memory circuits 94 and 95, and with respect to picture data of the frame data C4 and C5 picture data within a predetermined motion vector detecting range are outputted to subtraction circuits KN₀ to KN₂₅₅ and KP₀ to KP₂₅₅ in a parallel manner at the time of inputting the frame data C4 and C5 to the subtraction circuits KN₀ to KN₂₅₅ and KP₀ to KP₂₅₅.

Thus, difference data can be obtained through the absolute value summing circuits 100 and 101 when predicted frames are sequentially shifted within a motion vector detecting range about each of the macro unit blocks of frame data C4 and C5.

The minimum values of the difference data of the frame data C1, C2, C4 and C5 are detected in the comparison circuits 102 and 103, and thereby respective motion vectors of the forward prediction and the backward prediction are detected.

The result of preference comparison between difference data, obtained in a state of a predicted frame being not moved, and a minimum difference data, obtained through the comparison circuits 102 and 103 is obtained in the comparison circuits 105 and 106, and thereby 0 vector data MV₀ and detected motion vectors, outputted from the comparison circuits 102 and 103 are selectively outputted according to the preference of FIG. 9. Thus, motion vectors are selected so that video signals can be as a whole sent efficiently.

The motion vectors about the frame data C1, C2, C4 and C5 are outputted through the selection circuits 139 and 140 and are also provided to the adding circuits 120 to 125 and the halving circuit 128. Thus, the operation of the equations (3) and (4) is carried out, so that predicted motion vectors MV3PY and MV3NY of the frame data B3 are detected.

Thus, with respect to the frame data B3, its motion vector are detected within the motion vector detecting range on the basis of the predicted motion vectors MV3PY and MV3NY.

That is, for the frame data B3, the frame data A0 and A6, stored in the forward prediction frame memory circuit 89 and the backward prediction frame memory circuit 88, are outputted to the variable reading memories 94 and 95, and the picture data, which have shifted within the motion vector detecting range by the predicted motion vectors MV3PY and MV3NY relatively to the picture data of the frame data B3, are outputted from the variable reading memories 94 and 95 to the subtraction circuits KN₀-KN₂₅₅ and KP₀-KP₂₅₅ in a parallel manner.

By this operation, difference data can be obtained on the basis of the predicted motion vectors MV3PY and MV3NY through the absolute value summing circuits 100 and 101, and the motion vectors of the frame data B3 are detected by adding the predicted motion vectors MV3PY and MV3NY to the selective outputs of the selection circuits 107 and 108 in the adding circuits 135 and 136.

The picture data D_{VN} is outputted to the adaptive prediction circuit 10, in which mean values of the picture data of the luminance signal and the chrominance signal are obtained for each macro unit block through the mean value memory circuit 150 and these mean values data are outputted as direct current data DC to the transmission data composition circuit 32 and selecting circuit 152.

In addition, the picture data D_{VN} outputted to the adaptive prediction circuit 10 is selectively predicted with reference to frame data A0, A6 and B3 (frame data reconstructed in the adding circuit 28) stored in the forward prediction frame memory circuit 155, the backward prediction frame memory circuit 154 and the interframe memory circuit 156.

That is, to selectively predict about the frame data B3, the frame data A0 and A6 stored in the forward prediction frame memory circuit 155 and the backward prediction frame memory circuit 154 are outputted through the selection circuits 158, 159 to the variable reading memory 160 and 161, where the frame data are shifted by amount of the motion vectors to construct frame data FN and FP as the results of the backward prediction and forward prediction, respectively.

On the other hand, the frame data B3 is outputted to the subtracting circuits 165, 166 and 167, where the results of the subtraction of the frame data from the frame data FN and FP and the frame data FNP as the result of the interpolative prediction (outputted from the halving circuit 165) which is constructed by the frame data FN and FP.

The results of the subtraction are converted to absolute values in the absolute value summing circuits 168, 169 and 170 and are then accumulated for each macro unit block, so that the backward prediction difference data Δ FN, the forward prediction difference data ΔFP and the interpolative prediction difference data ΔFNP (FIG. 1) are obtained through the absolute value summing circuits 168, 169 and 170, respectively.

The minimum value of the difference data ΔFN, ΔFP and △FNP is detected in the comparison circuit 171.

Preferential comparison as shown in FIG. 12 is carried out between the minimum value and the difference data relative to the direct current data DC in the comparison circuit 174, so that the results of the prediction selection of the backward prediction, the forward prediction, the interpolative prediction and the intraframe coding processing are detected for each macro unit block through the comparison circuit 174.

On the other hand, in selective prediction of the frame data C1, C2, frame data A0, B3 stored in the forward prediction frame memory circuit 155 and the interframe memory circuit 156 are outputted to the variable reading memory 160 and 161 where frame data FN and FP as the results of the backward prediction and the forward prediction are constructed, respectively.

Thus, with respect to the frame data C1 and C2 difference data ΔFN of the backward prediction, ΔFP of the forward prediction and ΔFNP of the interpolative prediction are obtained in the subtracting circuits 165 to 166 as in the frame data B3, so that the results of the prediction selection of the backward prediction, the forward prediction, the interpolative prediction and the intraframe coding processing is outputted through the comparison circuit 174 for each macro unit block.

On the other hand, in selective prediction about the frame data C4 and C5, frame data B3 and A0 which are stored in the interframe memory circuit 156 and the backward prediction frame memory 154 are outputted to the variable reading memory 160 and 161, where they are shifted by amount of the motion vectors to produce frame data as the result of the prediction.

Thus, the results of the prediction selection of the frame data C4 and C5 are detected for each macro unit block through the comparison circuit 174 similarly to the frame data B3, C1 and C2.

The frame data FN, FP and FNP, which are the results of the backward prediction, the forward prediction and the interpolative prediction, respectively, and the direct current level data DC are selectively outputted according to the results of the prediction selection through the selecting circuit 152, so that the predicted data D_{PRI} constructed are outputted to the subtracting circuit 8.

On the other hand, the results of the prediction selection are outputted as the prediction index PINDEX from the selection circuit 180 to the transmission data composition circuit 32.

The predicted data D_{PRI} is subtracted from the picture data D_{VN} in the subtracting circuit 8 to thereby produce difference data D_{Z}.

The difference data D_{Z} is converted for each macro unit block according to the DCT technique in the discrete cosine transformation circuit 12.

The output data of the discrete cosine transformation circuit 12 are weighted according to the error data ER, outputted from the motion vector detecting circuit 6, in the multiplication circuit 14 and are then requantized in quantized stepsize according to the error data ER, the amount of the output data of the discrete cosine transformation circuit 12 and the amount of the input data of the buffer circuit 21 in the requantizing circuit 18.

Thus, the requantization of the data in quantized stepsize according to the error data ER, the amount of the output data of the discrete cosine tranformation circuit 12 and the amount of the input *data of* the buffer circuit 21 as well as the weighting processing thereof enables video signals to be sent at transmitted with high quality and each frame data to sent at predetermined amount of data.

The requantized picture data are variable length coded in the run-length Huffman coding circuit 30, and then in the transmission data composition circuit 32 variable length coded data of the motion vectors MVN and MVP, prediction index PINDEX, forward prediction reference index PID, backward prediction reference index NID, temporary index TR, etc. are added to the picture data, which are then converted to transmission data DATA according to the predetermined format (FIGS. 18 to 16) and are recorded on a compact disc.

Moreover, the requantized picture data is inversely converted to input data of the discrete cosine tranformation circuit 12 through the inverse requantizing circuit 22, the inverse multiplication circuit 24 and the inverse discrete cosine tranformation circuit 26 and is then added to the predicted data D_{PRI}, outputted from the adaptive prediction circuit 10, in the adding circuit 28 to be converted to frame data D_{F} which reconstructs the input data of the subtracting circuit 8.

Thus, the frame data D_{F} is stored in the forward prediction frame memory circuit 155, the backward prediction frame memory circuit 154 and the interframe memory circuit 156 of the adaptive prediction circuit 10 and is used as the forward prediction frame data and the backward prediction frame data.

Thus, predicted data D_{PRI} about frame data subsequently to be inputted to the subtracting circuit 8 is generated, and sequentially transmission frame data DATA is obtained.

Among the picture data D_{VN} reordered, frame data A0, B3 and A6 are stored in the forward prediction frame memory circuit 89, interframe memory circuit 90 and the backward prediction frame memory circuit 88, respectively, and thereby motion vectors MV3P, MV3N, BV1P, MV1N, MV2P, MV2N ... of frame data B3, C1, C2 are detected through the selection circuits 139 and 140.

The picture data D_{VN} is outputted to the adaptive prediction circuit 10, in which mean values of the picture data of the luminance signal and the chrominance signal are obtained for each macro unit block through the mean value memory circuit 150 and are outputted as direct current data DC to the transmission data composition circuit 32.

In addition, the picture data D_{VN} inputted to the adaptive prediction circuit 10 is selectively predicted with reference to frame data A0, A6 and B3 (frame data reconstructed in the adding circuit 28), and thereby difference data ΔFN, ΔFP and ΔFNP of the backward prediction, the forward prediction and the interpolative prediction (FIG. 1) can be obtained, respectively.

Among the difference data ΔFN, Δ FP and ΔFNP, the difference data having the smallest amount of data is selected, and thereby the result of selective prediction is detected for each macro unit block.

The frame data FN, FP and FNP, which are the results of the backward prediction, the forward prediction and the interpolative prediction, respectively, are selectively outputted according to the results of the prediction selection, so that the predicted data D_{PRI} constructed are outputted to the subtracting circuit 8.

On the other hand, the results of the prediction selection are outputted as the identification data PINDEX to the transmission data composition circuit 32.

The predicted data D_{PRI} is subtracted from the picture data D_{VN} in the subtracting circuit 8 to thereby produce difference data D_{Z}.

The difference data D_{Z} is converted for each macro unit block according to the DCT technique in the discrete cosine transformation circuit 12.

The output data of the discrete cosine conversion circuit 12 are weighted according to the error data ER, outputted from the motion vector detecting circuit 6, in the multiplication circuit 14 and are then requantized in quantized stepsize according to the error deta ER, the amount of the output of the discrete cosine transformation circuit 12 and the amount of the input of the buffer circuit 21 in the requantizing circuit 18.

Thus, the requantization of the data in quantized stepsize according to the error data ER, the amount of the output of the discrete cosine transformation circuit 12 and the amount of the input of the buffer circuit 21 as well as the weighting processing thereof enables video signals to be transmitted with high quality and each frame data to be sent at predetermined amount of data.

The requantized data are variable length encoded in the run-length Huffman encoding circuit 30 and then in the transmission data composition circuit 32, are then variable length encoded according to a predetermined format, and are thereafter recorded on a compact disc in a predetermined format.

On the other hand, motion vectors detected in the motion vector detecting circuit 6 are outputted to the run-length-Huffman circuit 34, where motion vectors are converted to vectors for one frame and are processed by adaptive encoding, and then they are recorded on a compact disc together with remainder data, and data, representing kind of the motion vectors, (that is, which can be detected by the forward prediction reference index PID, the backward prediction reference index NID and the temporary index TR). Moreover, the requantized picture deta is inversely converted to input data of the discrete cosine transformation circuit 12 through the inverse requantizing circuit 22, the inverse multiplication circuit 24 and the inverse discrete cosine transformation circuit 26 and is then added to the predicted data D_{PRI} outputted from the adaptive prediction circuit 10, in the adding circuit 28 to be converted to frame data D_{F} which reconstructs the input data of the subtracting circuit 8.

Thus, the frame data D_{F} is stored in the adaptive prediction circuit 10 and is used as the forward prediction frame data and the backward prediction frame data.

Thus, predicted data D_{PRI} about frame data subsequently to be inputted to the subtracting circuit 8 is generated, and sequentially transmission frame data DATA is obtained.

On the other hand, in the receiving circuit 200, reproduced data D_{PB} which is obtained by playing back the compact disc is inputted to the receiving circuit 201, where the head of each group of frames is detected. Then, the reproduced data D_{PB} is outputted together with the results of the detection to the reordering circuit 203 where it is reordered to produce picture deta D_{VPBN} having continuous frame data sequentially intraframe coded and interframe coded, PA0, PA6, PB3, PC1, PC2 ... .

The frame data reordered is outputted through the buffer circuit 204 to the separation circuit 206, where the frame group index GOF, the forward prediction reference index PID, the backward prediction reference index NID, etc. which have been added to the frame data and transmitted are reconstructed.

The frame data which has been outputted from the separation circuit 206 is inverse converted through the run-length Huffman inverse coding circuit 210, the inverse requantization circuit 211, the inverse multiplication circuit 212 and the discrete cosine inverse transformation circuit 213, so that the input data of the discrete cosine transformation circuit 12 is reconstructed.

The output data of the discrete cosine inverse transformation circuit 213 is added to the predicted data D_{PRI,} outputted from the adaptive prediction circuit 214, in the adding circuit 218, and the resultant output data D_{TIN} is outputted to the adaptive prediction circuit 214.

In the adaptive prediction circuit 214, about transmission frame data intraframe coded the transmitted direct current level data DC is outputted as the predicted data D_{PRI} through the selection circuit 230, and the output data D_{TIN} which sequentially reconstruct frame data A0, A6 and A12 are thereby obtained through the adding circuit 218.

The frame data A0 and A6 among the output data D_{TIN} of the adding circuit 218 are stored in the backward prediction frame memory circuit 232 and forward prediction frame memory circuit 234 for decoding subsequent frame data B3, C1, C2, C4 ... .

More specifically, the frame data A0 and A6 which are stored in the backward prediction frame memory circuit 232 and forward prediction frame memory circuit 234 are outputted through the selection circuits 236 and 238 to the variable reading memories 240 and 242.

Where the frame data A0 and A6 are displaced by amount of the motion vectors MVN and MVP for each macro unit block and then outputted, so that frame data as the results of the backward prediction and the forward prediction are constructed about the frame data B3.

The frame data outputted from the variable reading memories 240 and 242 are inputted to the adding circuit 248 and the halving circuit 250 to thereby construct frame data as the results of the interpolative prediction.

The frame data as the results of the backward prediction, the forward prediction and the interpolative prediction are outputted together with the direct current data DC to the selection circuit 230, from which they are selectively outputted according to the identification data PINDEX, so that predicted data D_{PRI} is constructed about the predetermined frame B3.

Thus, the predicted data D_{PRI} is outputted to the adding circuit 218 to thereby decode the frame data B3.

The frame data B3 decoded is stored in the interframe memory circuit 252 and is used as frame data for decoding frame data C1, C2, C4, ... together with the frame data A6 and A0 stored in the backward prediction frame memory circuit 232 and the forward prediction frame memory circuit 234.

That is, the frame data A6 and B3 stored in the forward prediction frame memory circuit 234 and the interframe memory 252 are outputted to the variable reading memories 240 and 242 through the selection circuits 236 and 238, so that freme data as the results of the backward prediction, the forward prediction and the interpolative prediction are constructed about the frame data C1 and C2.

On the other hand, the frame data B3 and A0 stored in the interframe memory circuit 252 and the backward prediction frame memory circuit 232 are outputted to the variable reading memories 240 and 242, where frame data as the results of the backward prediction, the forward prediction and the interpolative prediction are constructed about the frame data C4 and C5.

Thus, predicted data D_{PRI} regarding frame data C1, C2, C4 ... are obtained through the selection circuit 230 and is outputted to the adding circuit 218 to decode the frame data C1, C2, C4 .... .

The decoded frame data A0, A6, B3, C1, C2, C4, ... are outputted after they are rearranged in the original order through the delay circuits 262 and 266 and the selection circuit 260, 264 and 268, and thereby video signals highly efficiently coded and transmitted can be reconstructed.

On the other hand, in the reverse reproduction mode, the forward prediction and the backward prediction motion vectors are switched and then inputted to the variable reading memories 240 and 242, and at the same time, the contact switching operation of the selection circuit 23 is performed in the forward prediction and the backward prediction, so that as in the normal reproduction mode, predicted data D_{PRI} is obtained to reconstruct the original frame data.

The frame data A0 and A6 among the output data D_{TIN} of the adding circuit 218 are used in the adaptive prediction circuit 214 for decoding subsequent frame data B3, C1, C2, C4 ..., and the decoded frame data A0, A6, B3, C1, C2, C4, ... are arranged in the original order in the adaptive prediction circuit 214 and are then outputted, and thus moving picture video signals which have highly efficiently coded and sent can be reproduced.

### (4) Effects of the Embodiment

According to the construction above described, frame data are divided into groups of frames including 6 frame units, the leading frame data of each group of frames is intraframe coded, the frame data and frame data, intraframe coded, of the subsequent group of frames are set as predicted frames, and the fourth frame data of the group of frames is interframe coded and sent. Thus, video signals can be efficiently encoded by a simple construction with deterioration of picture quality effectively avoided and hence can be efficiently transmitted with high quality.

The fourth frame data of the group of frames and frame data intraframe coded of each group of frames and the subsequent group of frames are set as predicted frames, and the remaining frame data are thereby interframe coded and sent. Thus, degradation of picture quality can be effectively avoided and the remaining frame data can be more efficiently encoded.

Data representing each predicted frames are added to frame data to be interframe coded and then transmitted, and thereby the data transmitted can be decoded with a simple construction.

In the construction above described, double vectors MV1N, MV2P, MV4N, MV5P and triple vectors MV3N, MV3P are converted to vectors per one frame and are processed by variable length coding with preference to vectors having high probability of appearance. Thus, coding processing is performed with a common table and hence motion vectors can be optimized with a simple construction.

### (5) Other Embodiments

(5-1) In the embodiment above, it is illustrated that: frame data are divided into groups of frames including 6 frame units; the leading frame data thereof is intraframe coded; and the fourth frame data is interframe coded at the level 1 while the second, the third, the fifth and the sixth frame data are interframe coded at the level 2. The present invention is not limited to such processing but the intraframe coding processing and the interframe coding processing at the level 1 and 2 are variously combined according to needs.

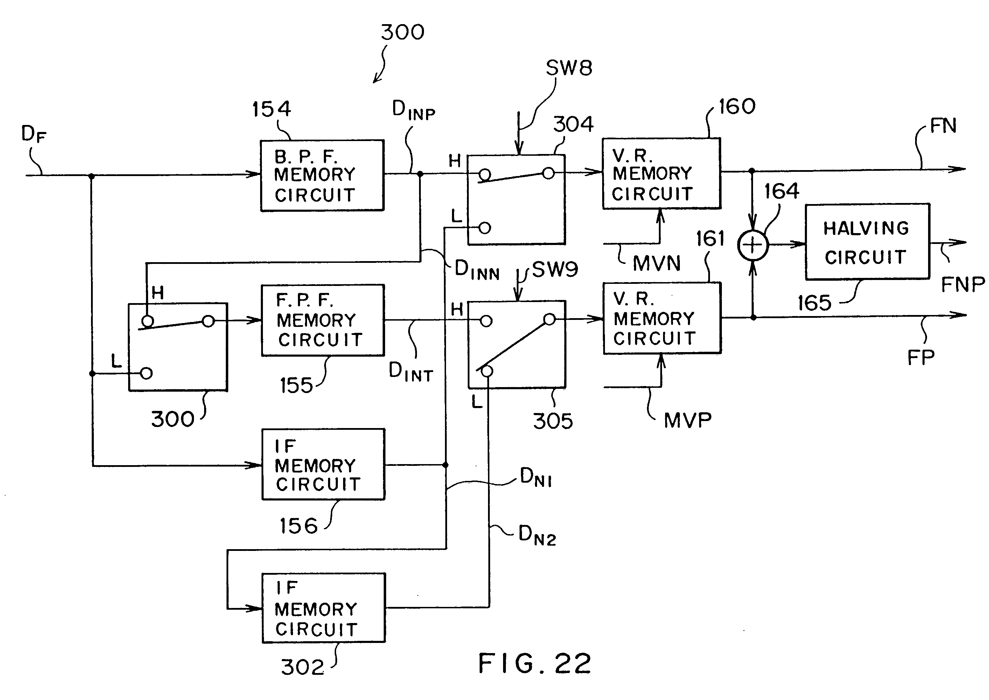

As shown in FIG. 21, for example, frame data are divided into groups of frames including 6 frame units, leading frame data A0, A6 are intraframe coded, the third and the fifth frame data B2 and B4 may be interframe coded at the level 1, and the second, the fourth and the sixth frame data C1, C3, and C5 may be interframe coded at the level 2.

In this case, frame data A0 and B2, A0 and A6, B2 and B4, A0 and A6, and B4 and A6 may be set as predicted frames for frame data C1, B2, C3, B4 and C5, respectively and may be predicted by the adaptive prediction circuit as illustrated in FIG. 22.

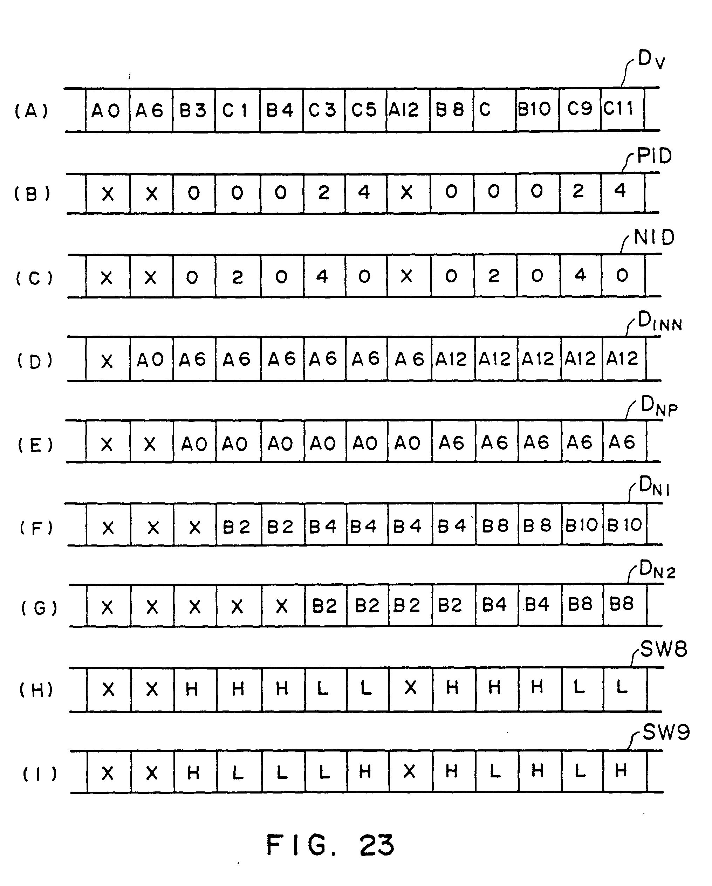

More specifically, as shown in FIG. 23, picture data D_{V} (FIG. 23(A)) is constructed by reordering frame data A0, C1, B2, C3, ... in the processing order of A0, A6, B2, C1, B4, C3, C5, ..., and simultaneously a forward prediction reference index PID (FIG. 23(B)) and a backward prediction reference index NID (FIG. 23(C)) are constructed;

Where the values of 0, 2 and 4 of the forward prediction reference index PID and the backward prediction reference index NID represent that frame data A0 and A6 to be intraframe coded, frame data B2 and frame data B4 are predicted frames, respectively.

The picture data D_{F} reconstructed on the basis of the picture data D_{V} is provided to the backward prediction frame memory 154 and the interframe memory circuit 156, and the output data of the interframe memory circuit 156 is provided to the interframe memory circuit 302.

The contacts of the selection circuit 300 are held on the side of the backward prediction frame memory 154.

Thus, the backward prediction frame memory 154 and the forward prediction frame memory 155 are switched to writing mode at the time of inputting frame data A0 and A6 to be intraframe coded, and then the interframe memory circuits 156 and 302 are switched to writing mode at the time of inputting the third and the fifth frame data B2 and B4. In this manner, frame data A0, A6, B2, B4 can be stored in each of the frame memory circuit 154 to 156 and 302 (FIGS. 23(D), (E), (F) and (G)).

Thus, the contacts of selection circuits 304 and 305 are sequentially switched in response to switching signals SW8 and SW9 (FIGS. 23(H) and (I)) and their selected outputs are outputted to variable reading memory circuit 160 and 161. By this operation, frame data FN, FNP and FP as the results of predictions can be constructed sequentially about frame data to be interframe coded; B3, C1, B4, C3, ....

Also when the processing sequence of frame data is switched in such a manner, frame data can be easily decoded in a receiving unit by adding the forward prediction reference index PID and the backward prediction reference index NID which represent predicted frames of each frame data.

Moreover, also when frame data are processed in the processing sequence thereof as shown in FIG. 1, frame data may be sequentially processed with reference to the forward prediction reference index PID and the backward prediction reference index NID, whereby selective prediction processing can be performed by using the adaptive prediction circuit as illustrated in FIG. 22.

The motion vector detection circuit and the adaptive prediction circuit of the receiving unit may be built similarly as in FIG. 22, and operations thereof may be switched with reference to the forward prediction reference index PID and the backward prediction reference index NID. In this fashion, the present invention can be applied to the case where frame data are transmitted in the processing sequence thereof as shown in FIG. 1, and hence the range of application of the transmitting unit and the receiving unit can be enlarged.

Furthermore, frame data D_{F} may be directly inputted to the forward prediction frame memory circuit 155 by switching the contact of the selection circuit 300, of which the operation may be switched on the basis of the forward prediction reference index PID and the backward prediction reference index NID. In this case, the selection circuit 300 may be adjusted to a case where frame data are processed in the processing sequence as shown in FIG. 24.

That is, the first frame data A0 is intraframe coded and then transmitted, and the third frame data B2 is transmitted by setting the frame data A0 as the predicted frame.

Then, the fifth frame data B4 and the seventh frame data B6 are sent by setting the frame data B2 and B4, which precede them by two frames respectively, as predicted frames, and the frame data C1, C3, ... interposed are sent by setting frame data A0 and B2, B2 and B4 as predicted frames.

Thus, predetermined predicted frame data are entered into the forward prediction frame memory circuit 154, the backward prediction frame memory circuit 154, and the interframe memory circuits 156 and 302 with reference to the forward prediction reference index PID and the backward prediction reference index NID, with the contact of the selection circuit 300 being switched over, and thereby video signals of the transmission format can be adaptively predicted.

(5-2) In the embodiment above described, video signals are previously compressed in amount of data to 1/4, and then the case in which the intraframe coding processing and the interframe coding processing are performed is illustrated. However, the amount of data compression is not limited to this but may be set to various values according to needs; for example, the intraframe coding processing and the interframe coding processing may be directly carried out with data compression being omitted.

(5-3) Furthermore, in the embodiment above, the case where video signals are recorded on a compact disc is described. The present invention is not limited to this but may be widely applied to a case where video signals are recorded on various recording media such as magnetic tape and a case where video signals are directly transmitted through a predetermined transmission channel.

(5-4) In the embodiment above, it is illustrated that succeeding frame data are divided in 6 frames, and detected motion vectors of which frame are 2 or 3 frames away from each other are transmitted. The present invention is not limited to this feature but may be widely applied to a case where motion vectors between frames which are frames away from each other are transmitted.

(5-5) Furthermore, in the embodiment above, the case where video signals are recorded on a compact disc is described. The present invention is not limited to this but may be widely applied to a case where video signals are recorded on various recording media such as magnetic tape and a case where video signals are directly transmitted through a predetermined transmission channel.

According to the present invention, digital video signals are divided into groups of predetermined frame units; digital video signals of each group of frames are intraframe coded and are interframe coded and transmitted with reference to the previous and next digital video signals intraframe coded. Thus, the present invention provides a video signal transmission system which enables video signals to be efficiently encoded and transmitted with deterioration of picture quality being effectively avoided and thereby makes it possible to highly efficiently transmit high quality video signals.

According to the present invention there is provided a video signal transmission system in which: digital video signals to be coded by interframe processing are divided into a group which is first intraframe coded and transmitted with reference to previous and next digital video signals interframe coded and another group which is processed with reference to the digital video signals first interframe coded, and transmitted whereby video signals are more efficiently coded and sent with degradation of picture quality being avoided with a simple construction.

According to the present invention, there is provided a video signal transmission system in which identification data of the digital video signals, which are referred to for the interframe coding processing, are added to the digital video signals, which are coded by the interframe processing and transmitted, and the digital video signals with the identification data are then transmitted, whereby the digital video signals transmitted are decoded with a simple construction.

According to the present invention, motion vectors between frames which are frames away from each other are converted to vectors per one frame, optimized and then sent. Thus, motion vectors can be optimized and transmitted with a simple construction.

## Claims

1. An encoding method for encoding motion vector (MVP, MVN) comprising the steps of:
detecting a motion vector between a first picture (A0, C1, C2, B3, C4, C5, A6) and a second picture (A0, C1, C2, B3, C4, C5, A6);
dividing a value based on said motion vector by a predetermined value to produce a quotient value (152, 154) and a remainder value (151, 160);
variable length encoding (156, 166) said quotient value with the use of a table of variable length codes such that zero values of said quotient value are encoded with the shortest codewords and other values of said quotient value are encoded with codewords of length progressively increasing with magnitude of the quotientvalue; and
encoding (162, 166) said remainder value such that zero values of said remainder value are encoded with a shorter codewords than non- zero values.

2. An encoding method according to claim 1 comprising the further step of encoding (166) information indicating the number of bits (DL2) of said remainder value.

3. A decoding method for decoding data coded according to the method of claim 1 or 2 to produce a motion vector (MVN, MVP), comprising the steps of:
separating (220) motion vector data including quotient data and remainder data from said coded data; and decoding said motion vector data with the use of a table of variable length codes.

4. A decoding method according to claim 3, wherein said motion vector data includes information indicating the number of bits of said remainder data.

5. An encoding apparatus for encoding a motion vector (MVN, MVP) comprising:
means (6) for detecting a motion vector between a first picture and a second picture;
means (34: 152, 154, 160) for dividing a value based on said motion vector by a predetermined value to produce a quotient value and a remainder value;
means (156) for variable length encoding said quotient value with the use of a table of variable length codes such that zero values of said quotient value are encoded with the shortest codewords and other values of said value are encoded with codewords of length progressively increasing with magnitude of the quotient value; and
means (160) for encoding said remainder value such that zero values of said remainder value are encoded with a shorter codewords than non-zero values.

6. An encoding apparatus according to claim 5, further comprising means (168) for encoding information indicating the number of bits (DL2) of said remainder value.

7. A decoding apparatus for decoding data coded in accordance with the method of claim 1, to produce a motion vector, comprising:
means (206,220) for separating motion vector data including quotient data and remainder data from said coded data; and
means for decoding said motion vector data with the use of a table of variable length codes.

8. A decoding apparatus according to claim 7, wherein said motion vector data includes information indicating the number of bits (DL2) of said remainder data.

## Patentansprüche

1. Codierverfahren zum Codieren eines Bewegungsvektors (MVP, MVN), welches folgende Schritte umfaßt:
Ermitteln eines Bewegungsvektors zwischen einem ersten Bild (A0, C1, C2, B3, C4, C5, A6) und einem zweiten Bild (A0, C1, C2, B3, C4, C5, A6);
Unterteilen eines Werts auf der Basis des Bewegungsvektors mit einem vorher-festgelegten Wert, um einen Quotientenwert (152, 154) und einen Restwert (151, 160) zu erzeugen;
Variabel-Längen-Codieren (156, 166) des Koeffizientenwerts unter Verwendung einer Tabelle von Variabel-Längencodes, so daß Null-Werte des Quotientenwerts mit den kürzesten Codewörtern codiert werden und andere Werte dieses Quotientenwerts mit Codewörtern einer Länge codiert werden, die progressiv mit der Größe des Quotientenwertes ansteigt; und
Codieren (162, 166) des Restwertes, so daß Null-Werte des Restwertes mit kürzeren Codewörtern als Nicht-Null-Werte codiert werden.

2. Codierverfahren nach Anspruch 1, welches weiter den Schritt aufweist, eine Information zu codieren (166), die die Anzahl von Bits (DL2) des Restwerts zeigt.

3. Codierverfahren zum Decodieren von Daten, die gemäß dem Verfahren von Anspruch 1 oder 2 codiert wurden, um einen Bewegungsvektor (MVN, MVP) zu erzeugen, welches folgende Schritte umfaßt:
Trennen (220) von Bewegungsvektordaten einschließlich Quotientendaten und Restdaten von den codierten Daten; und Decodieren der Bewegungsvektordaten unter Verwendung einer Tabelle von Variabel-Längen-Codes.

4. Decodierverfahren nach Anspruch 3, wobei die Bewegungsvektordaten eine Information umfassen, die die Anzahl von Bits der Restdaten zeigt.

5. Codiergerät zum Codieren eines Bewegungsvektors (MVN, MVP), welches umfaßt:
eine Einrichtung (6), um einen Bewegungsvektor zwischen einem ersten Bild und einem zweiten Bild zu ermitteln;
eine Einrichtung (34; 251, 154, 160), um einen Wert auf der Basis des Bewegungsvektors mit einem vorher-festgelegten Wert zu unterteilen, um einen Quotientenwert und einen Restwert zu erzeugen;
eine Einrichtung (156), um den Quotientenwert unter Verwendung einer Tabelle von Variabel-Längen-Codes variabel-längen-zu-codieren, so daß Null-Werte des Quotientenwerts mit den kürzesten Codewörtern codiert werden und andere Werte dieses Wertes mit Codewörtern einer Länge codiert werden, die progressiv mit der Größe des Quotientenwertes ansteigen; und
eine Einrichtung (160), um den Restwert zu codieren, so daß Null-Werte dieses Restwertes mit einem kürzeren Codewort als Null-Werte codiert werden.

6. Codiergerät nach Anspruch 5, welches außerdem eine Einrichtung (168) umfaßt, um eine Information, die die Anzahl von Bits (DL2) des Restwerts zeigt, zu codieren.

7. Decodiergerät zum Decodieren von Daten, die gemäß dem Verfahren nach Anspruch 1 codiert sind, um eine Bewegungsvektor zu erzeugen, welches umfaßt:
eine Einrichtung (206, 220), um Bewegungsvektordaten einschließlich Quotientendaten und Restdaten von den codierten Daten zu trennen; und
eine Einrichtung, um die Bewegungsvektordaten unter Verwendung einer Tabelle von Variabel-Längen-Codes zu decodieren.

8. Decodiergerät nach Anspruch 7, wobei die Bewegungsvektordaten eine Information umfassen, die die Anzahl von Bits (DL2) der Restdaten zeigt.

## Revendications

1. Procédé de codage pour coder un vecteur de déplacement (MVP, MVN), comprenant les étapes de :
détection d'un vecteur de déplacement entre une première image (A0, C1, C2, B3, C4, C5, A6) et une seconde image (A0, C1, C2, B3, C4, C5, A6) ;
division d'une valeur basée sur ledit vecteur de déplacement par une valeur prédéterminée afin de produire une valeur de quotient (152, 154) et une valeur de reste (151, 160) ;
codage en longueur variable (156, 166) de ladite valeur de quotient en utilisant une table de codes en longueur variable de telle sorte que des valeurs à zéro de ladite valeur de quotient soient codées avec les mots de code les plus courts et que d'autres valeurs de ladite valeur de quotient soient codées avec des mots de code d'une longueur qui croît progressivement avec l'amplitude de la valeur de quotient ; et
codage (162, 166) de ladite valeur de reste de telle sorte que des valeurs à zéro de ladite valeur de reste soient codées avec des mots de code plus courts que des valeurs non à zéro.

2. Procédé de codage selon la revendication 1, comprenant l'étape supplémentaire consistant à coder (166) une information indiquant le nombre de bits (DL2) de ladite valeur de reste.

3. Procédé de décodage pour décoder des données codées selon le procédé de la revendication 1 ou 2 afin de produire un vecteur de déplacement (MVN, MVP), comprenant les étapes de :
séparation (220) de données de vecteur de déplacement incluant des données de quotient et des données de reste à partir desdites données codées ; et
décodage desdites données de vecteur de déplacement en utilisant une table de codes en longueur variable.

4. Procédé de décodage selon la revendication 3, dans lequel lesdites données de vecteur de déplacement incluent une information indiquant le nombre de bits desdites données de reste.

5. Appareil de codage pour coder un vecteur de déplacement (MVN, MVP) comprenant :
un moyen (6) pour détecter un vecteur de déplacement entre une première image et une seconde image ;
un moyen (34 ; 152, 154, 160) pour diviser une valeur basée sur ledit vecteur de déplacement par une valeur prédéterminée afin de produire une valeur de quotient et une valeur de reste ;
un moyen (156) pour coder en longueur variable ladite valeur de quotient en utilisant une table de codes en longueur variable de telle sorte que des valeurs à zéro de ladite valeur de quotient soient codées avec les mots de code les plus courts et que d'autres valeurs de ladite valeur de quotient soient codées avec des mots de code d'une longueur qui croît progressivement avec l'amplitude de la valeur de quotient ; et
un moyen (160) pour coder ladite valeur de reste de telle sorte que des valeurs à zéro de ladite valeur de reste soient codées avec des mots de code plus courts que des valeurs non à zéro.

6. Appareil de codage selon la revendication 5, comprenant un moyen (168) pour coder une information indiquant le nombre de bits (DL2) de ladite valeur de reste.

7. Appareil de décodage pour décoder des données codées selon le procédé de la revendication 1 afin de produire un vecteur de déplacement, comprenant :
un moyen (206, 220) pour séparer des données de vecteur de déplacement incluant des données de quotient et des données de reste à partir desdites données codées ; et
un moyen pour décoder lesdites données de vecteur de déplacement en utilisant une table de codes en longueur variable.

8. Appareil de décodage selon la revendication 7, dans lequel lesdites données de vecteur de déplacement incluent une information indiquant le nombre de bits (DL2) desdites données de reste.
